(19)

**Europäisches Patentamt**

**European Patent Office**

**Office européen des brevets**

(11) **EP 3 363 245 B1**

(12) **EUROPEAN PATENT SPECIFICATION**

(45) Date of publication and mention of the grant of the patent:
**12.05.2021 Bulletin 2021/19**

(51) Int Cl.:
*H04W 64/00* (2009.01)

(21) Application number: **16788266.1**

(86) International application number:
**PCT/SE2016/050975**

(22) Date of filing: **10.10.2016**

(87) International publication number:
**WO 2017/065674 (20.04.2017 Gazette 2017/16)**

(54) **RADIO SIGNAL MEASUREMENT REPORTING**

BERICHTERSTATTUNG VON FUNKSIGNALMESSUNGEN

ÉTABLISSEMENT DE RAPPORTS DE MESURE DE SIGNAL RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2015 US 201562241676 P**

(43) Date of publication of application:
**22.08.2018 Bulletin 2018/34**

(73) Proprietor: **Telefonaktiebolaget LM Ericsson (publ)**
**164 83 Stockholm (SE)**

(72) Inventors:
  • **SIOMINA, Iana**
**183 30 Täby (SE)**
  • **KAZMI, Muhammad**
**174 64 Sundbyberg (SE)**

(74) Representative: **Ericsson**
**Patent Development**
**Torshamnsgatan 21-23**
**164 80 Stockholm (SE)**

(56) References cited:
  • ERICSSON: "Text Proposal and Discussion on Further enhancements for OTDOA", 3GPP DRAFT; R1-153744, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001192, Retrieved from the Internet: URL:http://www.3gpp.org/ftp/Meetings_3GPP_SYNC/RAN1/Docs/ [retrieved on 2015-08-23]
  • ERICSSON: "Text Proposal for Improved RSTD reporting", 3GPP DRAFT; R1-153609, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 1 June 2015 (2015-06-01), XP050979177, Retrieved from the Internet: URL:http://www.3gpp.org/ftp/tsg_ran/WG1_RL 1/TSGR1_81/Docs/ [retrieved on 2015-06-01]
  • ZTE: "On OTDOA-based enhancements", 3GPP DRAFT; R1-156103 ON OTDOA-BASED ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 6 October 2015 (2015-10-06), XP051002811, Retrieved from the Internet: URL:http://www.3gpp.org/ftp/Meetings_3GPP_SYNC/RAN1/Docs/ [retrieved on 2015-10-06]

- ZTE: "Discussion on RAT-dependent enhancements", 3GPP DRAFT; R2-154977 DISCUSSION ON RAT-DEPENDENT ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 6 October 2015 (2015-10-06), XP051005358, Retrieved from the Internet: URL:http://www.3gpp.org/ftp/Meetings_3GPP_ SYNC/RAN2/Docs/ [retrieved on 2015-10-06]

- 3GPP: "3GPP TS 36.133 v9.4.0 (2010-06) 3rd Generation Partnership Project;Technical Specification Group Radio Access Network;Evolved Universal Terrestrial Radio Access (E-UTRA);Requirements for support of radio resource management (Release 9)", 3GPP TS 36.133 V9.4.0, , vol. 36.133, no. V9.4.0 1 June 2010 (2010-06-01), pages 1-60, XP002666651, Retrieved from the Internet: URL:http://www.3gpp.org/ftp/Specs/html-inf o/36133.htm [retrieved on 2012-01-05]

**Description**

RELATED APPLICATIONS

This application claims priority to U.S. Provisional patent Application Serial Number 62/241676 filed April 14 October 2015.

TECHNICAL FIELD

The present disclosure relates generally to reporting the result of a radio signal measurement.

BACKGROUND

Radio measurements are performed on received radio signals. Measurements are used for a variety of purposes and applications. These include for example positioning, radio resource management (RRM), mobility, self-organizing network (SON), minimization of drive test (MDT). For instance, in the context of positioning, a radio node (e.g. a base station) performs measurements on positioning signals to determine the location of a given device (e.g. a user equipment, UE).

In some contexts, the result of a radio signal measurement is reported to another node, e.g., so that the recipient of the report can perform one or more operations using the result. For example, a base station or UE may report the result of radio signal measurement performed on a positioning signal to a positioning server in a core network, so that the positioning server can determine the position of the UE.

Known approaches for reporting the result of a radio signal measurement use a so-called single mapping approach. In this approach, different possible values for a single reporting variable are mapped to different possible values to report as the result of the radio signal measurement. The node reporting the result may for instance map the result of the radio signal measurement to one of the different possible values for the single reporting variable, and then report that value.

Single-mapping approaches prove limiting in a number of respects. For example, the single mapping statically confines the granularity or resolution at which the measurement result can be reported. Furthermore, the single mapping statically limits the range of values that can be reported as the measurement result.

Other related art can be found in 3GPP R1-153744 "Text Proposal and Discussion on Further enhancements for OTDOA", 3GPP R1-153609 "Text Proposal for Improved RSTD reporting", and 3GPP R1-156103 "On OTDOA-based enhancements". R1-153744 and R1-153609 relate to a so-called single mapping approach as described above. R1-156103 discloses that it is possible to re-select reference cell for positioning measurements on the network side and discloses how the eNB can derive the information needed to decide on a reselection of reference cell, based on the RSTD measurement received from the UE, but does not disclose anything about the UE mapping the result of the radio signal measurement.

SUMMARY

Embodiments herein improve traditional reporting of radio measurements performed by radio nodes. For example, one or more embodiments use a joint mapping approach to report the result of a radio signal measurement. In at least some embodiments, such use of a joint mapping approach advantageously increases the granularity and/or range of measurement reporting. As compared to a single-mapping approach, which statically confines the granularity or resolution at which a measurement result can be reported, a joint mapping approach may in some embodiments allow for adaptive resolution of reported measurement results. Furthermore, as compared to the single-mapping approach which statically limits the range of values that can be reported as a measurement result, the joint mapping approach in some embodiments may allow for dynamic extension of the range of values that can be reported.

In this regard, a joint mapping approach as used herein exploits a joint mapping in which different possible values for a first reporting variable and different possible values for a second reporting variable are jointly mapped (directly or indirectly) to different possible values for the result of a radio signal measurement.

More particularly, embodiments disclosed herein relates to a reporting node, a recipient node, a method implemented by the reporting node for reporting the result of a radio signal measurement to the recipient node, and a method implemented by a recipient node for determining the result of a radio signal measurement as reported by the reporting node. One or more embodiments include a computer program comprising instructions which, when executed by at least one processor of a node, causes the node to carry out methods as described herein.

Although different aspects of embodiments are given below, the scope of protection of the application is defined by the claims. The embodiments which do not fall within the scope of the claims are to be interpreted as examples useful for understanding the invention.

BRIEF DESCRIPTION OF THE DRAWINGS

Figure 1 is a block diagram of a reporting node for reporting the result of a radio signal measurement to a recipient node according to some embodiments. Figure 2 is a logic flow diagram of a method performed by a reporting node according to some embodiments.

Figures 3A-3B are block diagrams of joint mappings at a reporting node and recipient node, respectively, according to some embodiments.

Figures 4A-4E are block diagrams of different exemplary joint mappings according to various embodiments.

Figures 5A-4B are tables that embody a joint mapping for reporting RSTD measurement results according to some embodiments.

Figure 5C illustrates an information element for reporting an RSTD measurement result using the table in Figure 4A, according to some embodiments.

Figures 6A-6B are tables that embody a joint mapping for reporting Rx-Tx time difference measurement results according to some embodiments.

Figure 7 is a logic flow diagram of a method performed by a recipient node according to some embodiments.

Figure 8 is a block diagram of a system that includes a configuring node for configuring a reporting node to report the result of a radio signal measurement to a recipient node according to some embodiments.

Figure 9 is a logic flow diagram of a method performed by a configuring node according to some embodiments.

Figure 10 is a logic flow diagram of a method performed by a first node according to some embodiments.

Figure 11 is a logic flow diagram of a method performed by a second node according to some embodiments.

Figure 12 is a logic flow diagram of a method performed by a third node according to some embodiments.

Figure 13 is a block diagram of an LTE system according to some embodiments.

Figure 14 is a block diagram of an LTE system according to other embodiments.

Figure 15 is a block diagram of a reporting node according to some embodiments.

Figure 16 is a block diagram of a recipient node according to some embodiments.

Figure 17 is a block diagram of a configuring node according to some embodiments.

DETAILED DESCRIPTION

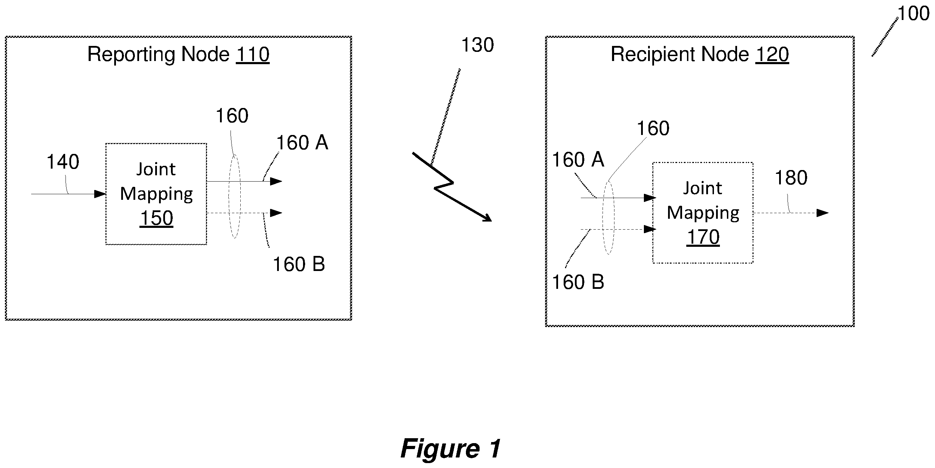

Figure 1 shows a system 100 in accordance with one or more embodiments for reporting the result of a radio signal measurement. The system includes a reporting node 110 (e.g. a base station or UE). The reporting node 110 is configured to obtain the result 140 of a radio signal measurement (e.g., a positioning measurement). The reporting node 110 may do so for instance by actually performing the radio signal measurement, or by receiving the result 140 from another node. Irrespective of how the reporting node 110 obtains the measurement result 140, the reporting node 110 reports that result 140 to a recipient node 120, e.g., by wireless or wireline transmission of one or more messages 130 to the recipient node 120. The reporting node 110 may do so for instance so that the recipient node 120 can perform one or more operations or operational tasks based on that reporting.

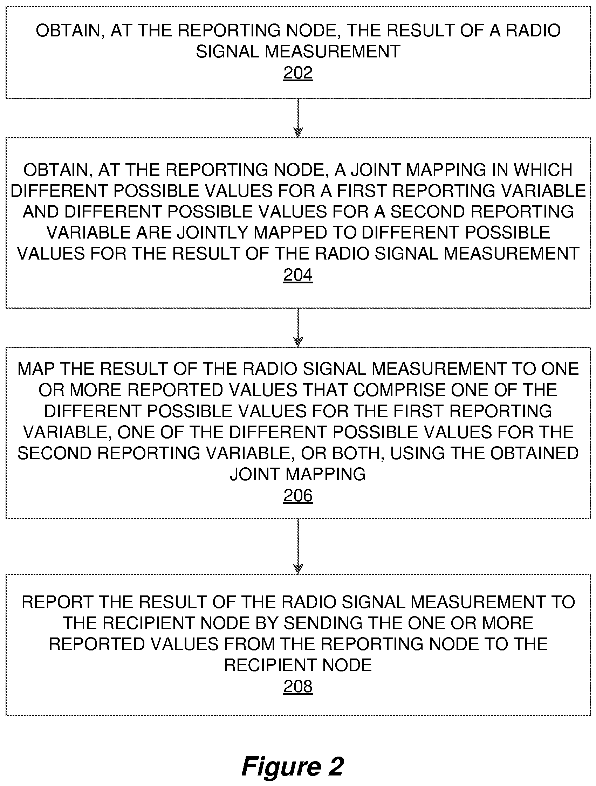

According to one or more embodiments herein, the reporting node 110 advantageously employs a so-called joint mapping 150 to report the measurement result 140 to the recipient node 120, rather than using a single mapping. Figure 2 illustrates processing performed by the reporting node 110 in this regard.

As shown in Figure 2, processing at the reporting node 110 includes obtaining the result 140 of the radio signal measurement (Block 202), e.g., by performing the radio signal measurement or by receiving the result from another node. Processing further includes obtaining a joint mapping 150 in which different possible values for a first reporting variable and different possible values for a second reporting variable are jointly mapped to different possible values for the result 140 of the radio signal measurement (Block 204). The joint mapping may be preconfigured at the reporting node 110. The different reporting variables may be for instance different types of variables, e.g., the possible values for the first variable are not possible values for the second variable, and vice versa. In any event, processing then includes mapping the result 140 of the radio signal measurement to one or more reported values 160, using the obtained joint mapping 150 (Block 206). These one or more reported values 160 comprise one of the different possible values for the first reporting variable, one of the different possible values for the second reporting variable, or both. As shown in Figure 1, for instance, the reported value(s) 160 may comprise a single reported value 160A (i.e., one value for either the first or second reporting variable) or may comprise multiple reported values 160A, 160B, etc. (i.e., one value for each of the first and second reporting variables). Regardless, processing at the reporting node 110 further includes reporting the result 140 of the radio signal measurement to the recipient node 120 by sending the one or more reported values 160 from the reporting node 110 to the recipient node 120.

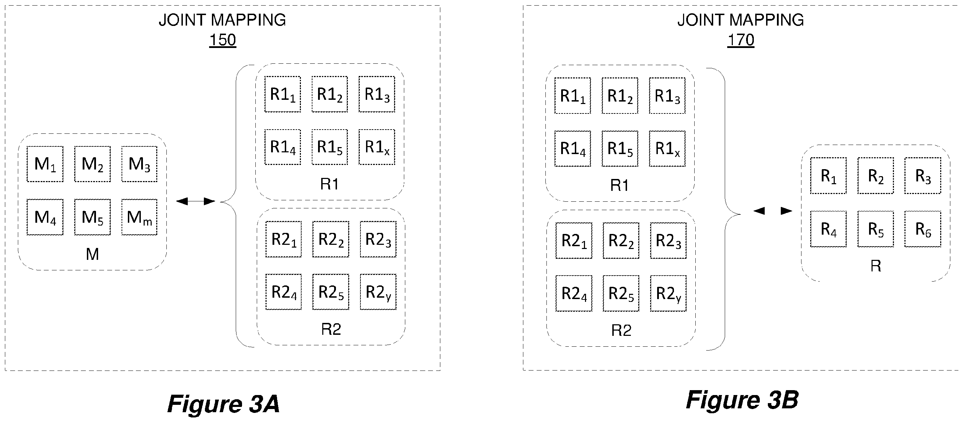

Figure 3A generally depicts the joint mapping 150 at the reporting node 110 according to one or more embodiments. As shown, the result 140 of the radio signal measurement is represented as a variable M that has m different possible values $M_1, M_2, \ldots M_m$. Similarly, the first reporting variable is represented as a variable R1 that has x different possible values $R1_1, R1_2 \ldots R1_x$. And the second reporting variable is represented as a variable R2 that has y different possible values $R2_1, R2_2, \ldots R2_y$. According to the joint mapping 150, the different possible values $R1_1, R1_2 \ldots R1_x$ for R1 and the different possible values $R2_1, R2_2 \ldots R2_y$ for R2 are jointly mapped to different possible values $M_1, M_2, \ldots M_m$ for M.

This effective mapping may be direct or indirect, i.e., as a function of or via a mapping to one or more intermediate variables. In one or more embodiments, for example, the measurement result M is first mapped to or otherwise translated to a reported result R, which may or may not be the same as the actual measurement result M. The reported result R may be for instance a quantized or rounded version of M. This reported result R is then jointly mapped to the first reporting variable R1 and the second reporting variable R2. Alternatively, rather than first translating the measurement result M to a reported result R, the joint mapping 150 may directly map the measurement result M to the first reporting variable R1 and the second reporting variable R2.

In one or more embodiments, the joint mapping means that the full set of m possible values for the measurement result M (or the full set of possible values for a reported result R) can only be represented through joint use of both the first reporting variable R1 and the second reporting variable R2. In some embodiments, for example, reporting any of m1 possible values for the measurement result M in a first subset (e.g., within a first range or granularity) requires reporting one of the different possible values for the first reporting variable R1 (without reporting one of the different possible values for the second reporting variable R2). And reporting any of m2 possible values for the measurement result M in a second subset (e.g., within a second range or granularity) requires reporting just one of the different possible values for the second reporting variable R2 (without reporting one of the different possible values for the first reporting variable R1). In other embodiments, though, reporting any or some of the m possible values for the measurement result M requires jointly reporting both one of the different possible values for the first reporting variable R1 and one of the different possible values for the second reporting variable R2.

In general, therefore, the reporting node 110 in some embodiments may map the result 140 of the radio signal measurement to multiple reported values 160 that jointly represent that result 140. The multiple reported values include one of the different possible values for the first reporting variable and one of the different possible values for the second reporting variable. The reporting node 110 may do this selectively based on one or more conditions, or may do this only to report some measurement result values but not others. In one or more embodiments, for example, the reporting node 110 maps the measurement result 140 to a single reported value 160 to report one of the different possible measurement result values in a subset, but jointly maps the measurement result 140 to multiple reported values 160 to report one of the different possible measurement result values in a different subset.

Consider for example embodiments where the different possible values for the first reporting variable are mapped to different possible values for the result 140 of the radio signal measurement at a first granularity (or resolution), and the different possible values for the second reporting variable are mapped to different possible values for the result 140 of the radio signal measurement at a second granularity (or resolution). In some embodiments, the second granularity is finer than the first granularity, i.e., the steps between neighbor values for the reported result at the second granularity are smaller than the steps between neighbor values for the reported result at the first granularity. In the case that the second granularity is finer than the first granularity, the reporting node 110 may selectively report one of the measurement result values at the first granularity by just mapping that result value to a single reported value 160 in the form of one of the different possible values for the first reporting variable or one of the different possible values for the second reporting variable. On the other hand, the reporting node 110 may selectively report one of the measurement values at the second granularity by jointly mapping that result value to multiple reported values 160 in the form of one of the different possible values for the first reporting variable and one of the different possible values for the second reporting variable.

In these or other embodiments, the different possible values for the first reporting variable may correspond to different intermediate results of the radio signal measurement, and different possible values for the second reporting variable may correspond to different delta values by which to increment or decrement an intermediate result reported with the first reporting variable. For example, the intermediate results may correspond to different possible integer values for the measurement result, and the different delta values may correspond to different fractional increments or decrements to be applied to the integer value reported with the first reporting variable.

In still other embodiments, the reporting node 110 maps the result of the radio signal measurement to a single reported value 160 that comprises either one of the different possible values for the first reporting variable or one of the different possible values for the second reporting variable. In one such embodiment, for example, the different possible values for the first reporting variable are mapped to different possible values for the result of the radio signal measurement within a first range, and the different possible values for the second reporting variable are mapped to different possible values for the result of the radio signal measurement within a second range so as to extend the first range (either above or below the first range).

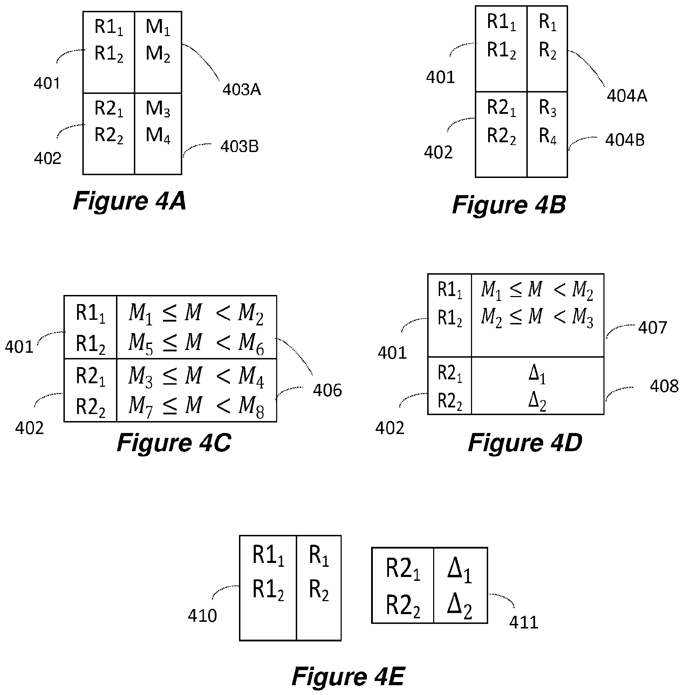

Figures 4A-4E illustrate more detailed joint mappings according to one or more embodiments.

As shown in the joint mapping of Figure 4A, different possible values for a first reporting variable R1 are shown as a set of values 401 ($R1_1$, $R1_2$...). The values in this set 401 are mapped to different possible values for the measurement result M, shown as set 403A (e.g. $M_1$, $M_2$). Further, different possible values for a second reporting variable R2 are shown as a set of values 402 (e.g. $R2_1$, $R2_2$...). The values in this set 402 are mapped to other different possible values for the measurement result M, shown as set 403B (e.g. $M_3$, $M_4$).

Rather than such a direct mapping between R1, R2 and M, Figure 4B illustrates an indirect mapping that indirectly maps R1, R2 and M as a mapping between R1, R2 and a reported result R (which is derived or otherwise determined as a function of M). Specifically, as shown, the set 401 of different possible values ($R1_1$, $R1_2$) for the first reporting variable R1 is respectively mapped to a set 404A of different possible values ($R_1$, $R_2$) for the reported result R. Further, the set 402 of different possible values ($R2_1$, $R2_2$) for the second reporting variable R2 is respectively mapped to a set 404B of different possible values ($R_3$, $R_4$) for the reported result R.

In some embodiments, the sets 403B and 404B include measurement result or reported result values that are outside of the range of values within sets 403A or 404A, respectively. In this case, the sets 403B and 404B extend the range of sets 403A and 404A. In other examples, the sets 403B and 404B intersperse within the range of the values in sets 403A and 404A, respectively, so as to define possible values with greater resolution.

In one or more embodiments, for example, the different possible values for the first reporting variable (e.g. set 401 of Figure 4A) are mapped to different possible values for the result of the radio signal measurement within a first range (e.g. 403A of Figure 4A), and the different possible values for the second reporting variable (e.g. 402 of Figure 4A) are mapped to different possible values for the result of the radio signal measurement within a second range (e.g. 403B of Figure 4A) so as to extend the first range.

In other embodiments shown in the joint mapping of Figure 4C, the different reporting variables each map to a range of possible measurement result values 406. Thus, the measurement result value (M) is somewhere in a spectrum of possible measurements and a reporting variable (e.g. of set 401) represents this spectrum. The spectrums with relation to one of the other spectrums in one or more sets 406 may be continuous (e.g. $M_2 = M_5$ or $M_3$). This may for example provide a continuous spectrum of possible measurement results.

As shown in joint mapping Figure 4D, a first reporting variable represents a range of possible measurement result values (or alternatively one possible measurement result value) and a second reporting variable corresponds to a function or operation to be performed with respect to the first reporting variable, such that a measurement result value is determined (e.g. by deriving the measurement result through combining one of the first reporting variable and one of the second reporting variable).

For example, with respect to joint mapping in Figure 4D, one reporting variable in set 402 is expressed as a delta value in set 408 to increase or decrease a measurement result in set 407 (or a component of a range of measurement results). Indeed, in one embodiment, a delta value in set 408 increases or decreases the lower-bound component or the upper-bound component of a range of measurement results reported by a reporting variable in set 401, e.g., whereby the range resulting from application of that delta value constitutes the reported range within which the measurement result M lies. Where $R1_1$ from set 401 reports that the measurement result M is within the range $M_1 \le M < M_2$, for instance, the reporting of $R2_1$ from set 402 may mean that the lower-bound component of the range $M_1 \le M < M_2$ is to be increased by the delta value $\Delta_1$ reported by $R2_1$, resulting in the reporting that the measurement result M is within the range $M_1 + \Delta_1 \le M < M_2$. In this way, the increase or decrease adjusts the granularity of the reported measurement result.

One of ordinary skill in the art will appreciate that joint mappings in various embodiments may include more than two types of reporting variables. Further, one of ordinary skill in the art will appreciate that in various embodiments the reporting variables are stored or expressed separately as for example multiple tables (e.g. tables 410 of Figure 4E and 411 of Figure 4E), such that in combination they represent or correspond to a joint mapping (e.g. joint mapping 412). In one or more embodiments, therefore, the joint mapping is embodied across a first mapping table (e.g. table 410 of Figure 4E) for the first reporting variable and a second mapping table for the second reporting variable (e.g. table 411 of Figure 4E).

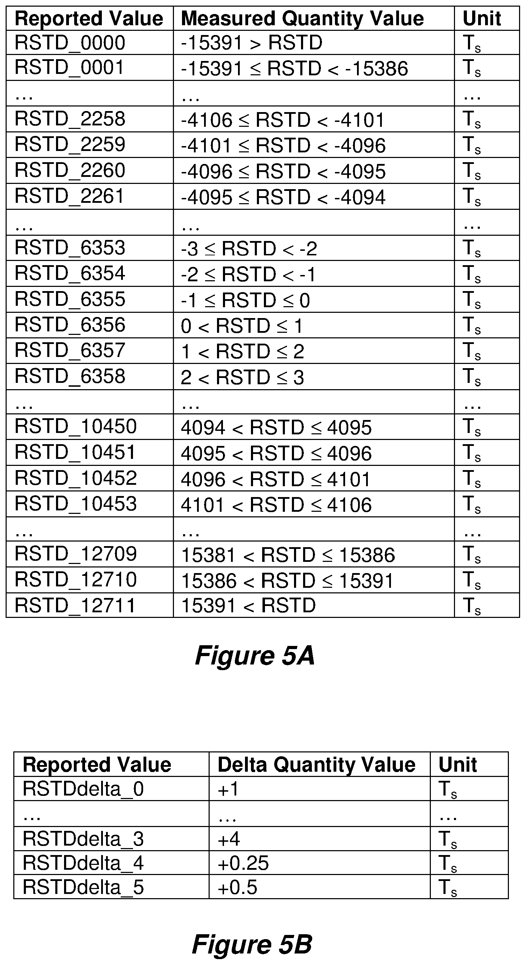

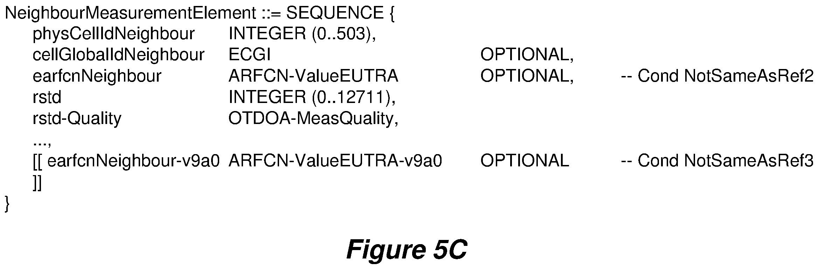

Figures 5A-5C illustrate two exemplary tables in this regard in the context of the joint mapping scheme shown in Figure 4D. In this example, the radio signal measurement to be reported is a reference signal time difference (RSTD) measurement. A joint mapping used for reporting an RSTD measurement result is embodied within a first table shown in Figure 5A and a second table shown in Figure 5B. Figure 5A shows that different possible values for a first reporting variable include values {RSTD_0000, RSTD_0001,....RSTD_12710, and RSTD_12711}. The different possible values for the first reporting variable report different possible ranges of RSTD measurement results (expressed in units of Ts). In particular, the value RSTD_0001 for the first reporting variable reports an RSTD measurement result (denoted in Figure 5A as simply "RSTD") within the range -115391 $\le$ RSTD < -15386, whereas the value RSTD_12710 reports an RSTD measurement result within the range 15386 $\le$ RSTD < 15391. Figure 5A may in some embodiments correspond to the Rel-9 RSTD report mapping shown as Table 9.1.10.3-1 in 3GPP TS 36.133 V13.1.0 (2015-10-02). In this case, the value from the table in Figure 5A may be reported via the Long Term Evolution (LTE) Positioning Protocol (LPP) using the information element shown in Figure 5C (see 3GPP TS 36.355 V12.4.0 (2015-03)). In particular, the field rstd in the information element of Figure 5C specifies the relative timing difference between a particular neighbor cell and the RSTD reference cell.

Figure 5B shows that different possible values for a second reporting variable include values {RSTDdelta_0, RSTDdelta_1,... RSTDdelta_4, and RSTDdelta_5}. The different possible values for the second reporting variable report different possible delta quantity values (expressed in units of Ts). In particular, the value RSTDdelta_0 for the second reporting variable reports a delta quantity value of +1, whereas the value RSTDdelta_5 reports a delta quantity value of +0.5.

According to this example, a delta quantity value reported according to the table in Figure 5B is to increase the lower-bound component of the RSTD measurement result range reported according to the table in Figure 5A. The range resulting from application of this delta quantity value constitutes the reported ranged within which the RSTD measurement result lies. For example, RSTD_6354 from the table in Figure 5A reports the RSTD measurement result range of $-2 \leq RSTD < -1$. If RSTDdelta_5 is reported jointly with RSTD_6354, the lower-bound component of the reported range, namely -2, is to be increased by the delta quantity value reported by RSTDdelta_5, namely +0.5. Application of this +0.5 delta quantity value means that the reported quantity (RSTD_6354, RSTDdelta_5) reports an RSTD measurement result within the range $-1.5 \leq RSTD < -1$. The reporting node 110 may thereby report the quantity (RSTD_6354, RSTDdelta_5) in order to report an RSTD measurement result = -1.5 Ts to the recipient node 120. Based on this example, the value reported from the table in Figure 5A (namely, RSTD_6354) may be referred to as a reference value and the value reported from the table in Figure 5B (namely, RSTDdelta_5) may be referred to as a relative value.

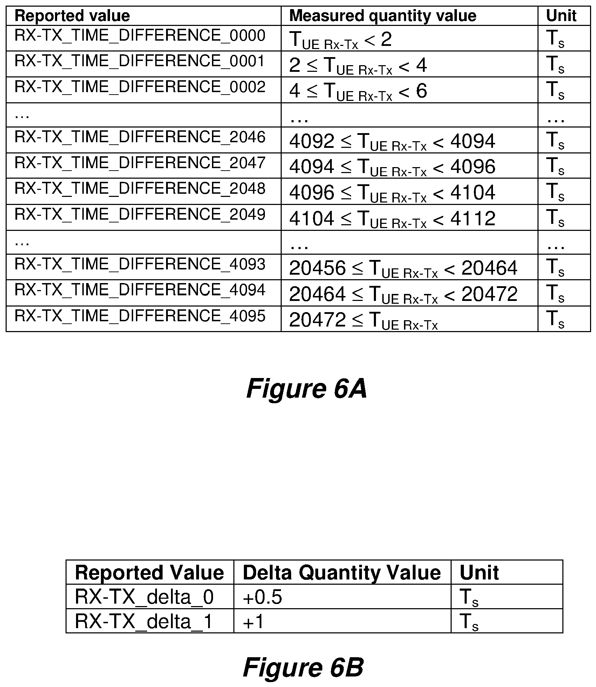

Figures 6A-6B illustrate a similar example in the context of a UE Rx-Tx time difference measurement. A joint mapping used for reporting a UE Rx-Tx time difference measurement result is embodied within a first table shown in Figure 6A and a second table shown in Figure 6B. Figure 6A shows that different possible values for a first reporting variable include values {RX-TX_TIME_DIFFERENCE_0000, RX-TX_TIME_DIFFERENCE_0001,.... RX-TX_TIME_DIFFERENCE _1094, and RX-TX_TIME_DIFFERENCE _4095}. The different possible values for the first reporting variable report different possible ranges of Rx-Tx time difference measurement results (expressed in units of Ts). In particular, the value RX-TX_TIME_DIFFERENCE _0001 for the first reporting variable reports an Rx-Tx time difference measurement result (denoted in Figure 6A as simply "$T_{UE\ Rx\text{-}Tx}$") within the range $2 \leq T_{UE\ Rx\text{-}Tx} < 4$, whereas the value RX-TX_TIME_DIFFERENCE _4094 reports an Rx-Tx time difference measurement result within the range $20464 \leq T_{UE\ Rx\text{-}Tx} < 20472$. Figure 6A may in some embodiments correspond to the Rel-9 UE Rx-Tx report mapping shown as Table 9.1.9.2-1 in 3GPP TS 36.133 V13.1.0 (2015-10-02).

Figure 6B shows that different possible values for a second reporting variable include values {RX-Tx_delta_0 and RX-Tx_delta_1}. The different possible values for the second reporting variable report different possible delta quantity values (expressed in units of Ts).

In particular, the value RX-Tx_delta_0 for the second reporting variable reports a delta quantity value of +0.5, whereas the value RX-Tx_delta_1 reports a delta quantity value of +1.

According to this example, a delta quantity value reported according to the table in Figure 6B is to increase the lower-bound component of the Rx-Tx time difference measurement result range reported according to the table in Figure 6A. The range resulting from application of this delta quantity value constitutes the reported ranged within which the Rx-Tx time difference measurement result lies. For example, RX-TX_TIME_DIFFERENCE _0001 from the table in Figure 6A reports the Rx-Tx time difference measurement result range of $2 \leq T_{UE\ Rx\text{-}Tx} < 4$. If RX-Tx_delta_1 is reported jointly with RX-TX_TIME_DIFFERENCE_0001, the lower-bound component of the reported range, namely 2, is to be increased by the delta quantity value reported by RX-Tx_delta_1, namely +1. Application of this +1 delta quantity value means that the reported quantity (RX-TX_TIME_DIFFERENCE _0001, RX-Tx_delta_1) reports an Rx-Tx time difference measurement result within the range $3 \leq T_{UE\ Rx\text{-}Tx} < 4$. The reporting node 110 may thereby report the quantity (RX-TX_TIME_DIFFERENCE _0001, RX-Tx_delta_1) in order to report an Rx-Tx time difference measurement result = 3 Ts to the recipient node 120. Based on this example, the value reported from the table in Figure 6A (namely, RX-TX_TIME_DIFFERENCE _0001) may be referred to as a reference value and the value reported from the table in Figure 6B (namely, RX-Tx_delta_1) may be referred to as a relative value.

In some embodiments, a joint mapping is always used, whereas in other embodiments, it is used selectively (e.g. to revert to a single mapping approach in certain circumstances).

In one or more embodiments, therefore, a method of a reporting node 110 further comprises dynamically determining whether the reporting node 110 is to map the result of the radio signal measurement to the one or more reported values using the joint mapping or to a single reported value using a single mapping. The single mapping in this regard maps different possible values for a single reporting variable to different possible values for the result of the radio signal measurement. As a first example, the dynamically determining is performed based on a type or purpose of the radio signal measurement, e.g., whether the measurement is an RSTD measurement, whether the measurement is a measurement for positioning, whether the measurement is for indoor positioning, or whether the measurement is for an emergency call.

As a second example, the dynamically determining may be performed based on an accuracy or quality of the radio signal measurement. As a third example, the dynamically determining is performed based on radio conditions, a type of radio environment, or a radio deployment scenario in which the radio signal measurement is performed. As a fourth example, the dynamically determining dynamically determining is performed based on a type of the recipient node (e.g., whether the recipient node is a UE or a network node). As a fifth example, the dynamically determining is performed based on an amount of transmission resources available for reporting the result of the radio signal measurement, an amount of overhead required for reporting the result of the radio signal measurement, or both. Additionally, one or more of the above examples may be combined such that the dynamically determining is performed based on a combination of factors.

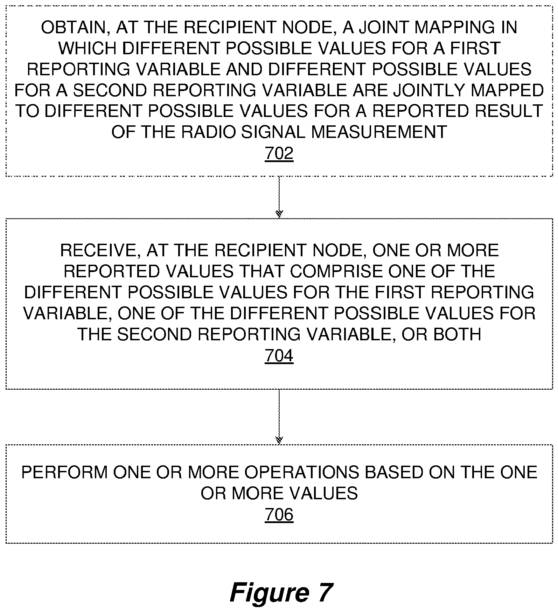

Some embodiments include a corresponding method, implemented by a recipient node 120 (or receiving node), for determining the result of a radio signal measurement as reported by a reporting node 110. As shown in Figure 7, the method includes receiving, at the recipient node 120, one or more reported values 160 that comprise one of different possible values for a first reporting variable, one of the different possible values for a second reporting variable, or both (Block 704). The different possible values for a first reporting variable and different possible values for a second reporting variable are jointly mapped to different possible values for a reported result (e.g., R) of the radio signal measurement. The method also includes performing one or more operations based on the one or more reported values 160 (Block 706).

The recipient node 120 in some embodiments also obtains a joint mapping 170 that corresponds to the joint mapping 150 at the reporting node 110 (Block 702). In some embodiments, the joint mapping 150 and the joint mapping 170 are the same, and in others, they are different. In some embodiments, for example, the joint mapping 170 at the recipient node 110 is shown in Figure 3B. As shown, the different possible values for the first reporting variable R1 and the different possible values for the second reporting variable R2 are jointly mapped to different possible values for a reported result R of the radio signal measurement. Regardless of the particular form of the joint mapping 170, though, the recipient node 120 may map the one or more reported values 160 to one of the different possible values for the reported result, using the joint mapping 170. The recipient node 120 may then perform one or more operations based on the reported value(s) 160 and/or the reported result (e.g. as derived from a joint mapping approach).

For example, in one or more embodiments as described above, one or more reported values 160 comprise multiple reported values 160 that jointly represent the reported result of the radio signal measurement. The multiple reported values 160 include one of the different possible values for the first reporting variable and one of the different possible values for the second reporting variable.

In one or more embodiments, the different possible values for the first reporting variable are mapped to different possible values for the reported result of the radio signal measurement at a first granularity. The different possible values for the second reporting variable are mapped to different possible values for the reported result of the radio signal measurement at a second granularity. For example, the second granularity is finer than the first granularity.

In one or more embodiments, the different possible values for the first reporting variable report or correspond to different intermediate results of the radio signal measurement, and different possible values for the second reporting variable report or correspond to different delta values by which the recipient node is to increment or decrement an intermediate result reported with the first reporting variable.

In one or more embodiments, the one or more reported values comprise a single reported value that is either one of the different possible values for the first reporting variable or one of the different possible values for the second reporting variable. The mapping comprises mapping the single reported value to a reported result of the radio signal measurement.

In one or more embodiments, the different possible values for the first reporting variable are mapped to different possible values for the reported result of the radio signal measurement within a first range, and the different possible values for the second reporting variable are mapped to different possible values for the reported result of the radio signal measurement within a second range so as to extend the first range.

In one or more embodiments, methods implemented in the recipient node 120 further comprises dynamically determining whether to map the one or more reported values to the reported result of the radio signal measurement using the joint mapping or to map a single reported value to the reported result of the radio signal measurement using a single mapping. The single mapping maps different possible values for a single reporting variable to different possible values for the result of the radio signal measurement. The dynamically determining is based on one or more factors or a combination of factors as described above. For example, the dynamically determining is performed based on a type or purpose of the radio signal measurement.

In one or more embodiments, the radio signal measurement is a positioning measurement, and wherein performing one or more operations comprises determining the position of a node for which the positioning measurement is performed.

In one or more embodiments, the recipient node 120 interprets the received reporting variables based on a joint mapping.

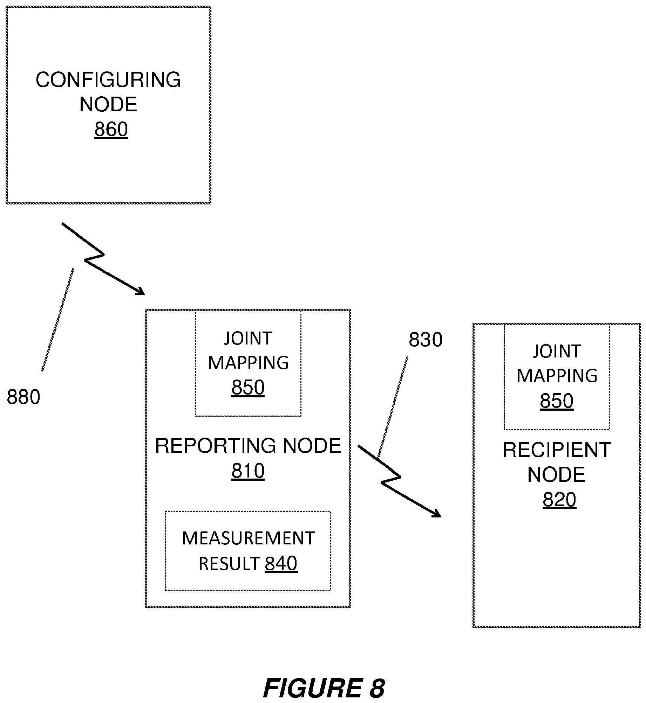

Some embodiments include a configuring node for configuring the reporting node 110 for reporting the result of a radio signal measurement to the recipient node 120. Figure 8 shows an example system including a configuring node 860 in this regard. The configuring node 860 is configured to configure the reporting node 110 (e.g. by signaling configuration information 880 to the reporting node 110).

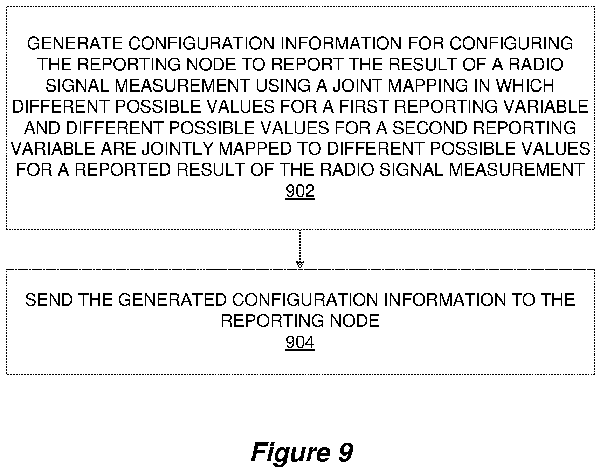

Figure 9 shows an example method in this regard. The method includes generating configuration information for configuring the reporting node 110 to report the result of a radio signal measurement using a joint mapping in which different possible values for a first reporting variable and different possible values for a second reporting variable are jointly mapped to different possible values for a reported result of the radio signal measurement (Block 902). The method also includes sending the generated configuration information to the reporting node (Block 904).

Those of ordinary skill in the art will appreciate that the configuring node 860 or methods implemented by the configuring node 860 can be implemented by a reporting node (e.g. reporting node 810) and/or a recipient node (e.g. recipient node 810) or any other reporting node or recipient node as described herein.

In one or more embodiments, the configuration information includes the different possible values for the first reporting variable and/or the different possible values for the second reporting variable.

In one or more embodiments, the configuration information indicates whether the reporting node is to report the result of the radio signal measurement using the joint mapping and/or whether the reporting node is to instead report the result of the radio signal measurement using a single mapping. For example, the single mapping maps different possible values for a single reporting variable to different possible values for the reported result of the radio signal measurement

In one or more embodiments, the configuration information indicates one or more conditions under which the reporting node is to report the result of the radio signal measurement using the joint mapping. For example, the conditions include conditions with respect to dynamically determining to send a joint mapping. For example, the configuration information includes a type or purpose of the radio signal measurement under which the reporting node is to report the result of the radio signal measurement using the joint mapping.

In one or more embodiments, as for example a method implemented in the described reporting node 110 or receiving node 120, the radio signal measurement is a positioning measurement in a Long Term Evolution (LTE) system or a system that evolves from LTE.

One or more embodiments described herein provide advantages in systems with evolving technology in a standardized environment, (e.g. 3GPP standardization). With new deployment types, new features and wireless technology advances, embodiments taught herein allow for updating measurement reporting to increase measurement report resolution or extend the range into smaller or larger values or both. For instance, indoor positioning now requires better accuracy in the reported measurements than the currently 3GPP standardized measurement report mapping provides. Embodiments herein allow for updated measurement reporting to support the enhanced accuracy. Those of ordinary skill in the art will understood that they are merely examples and not limiting on the teachings herein.

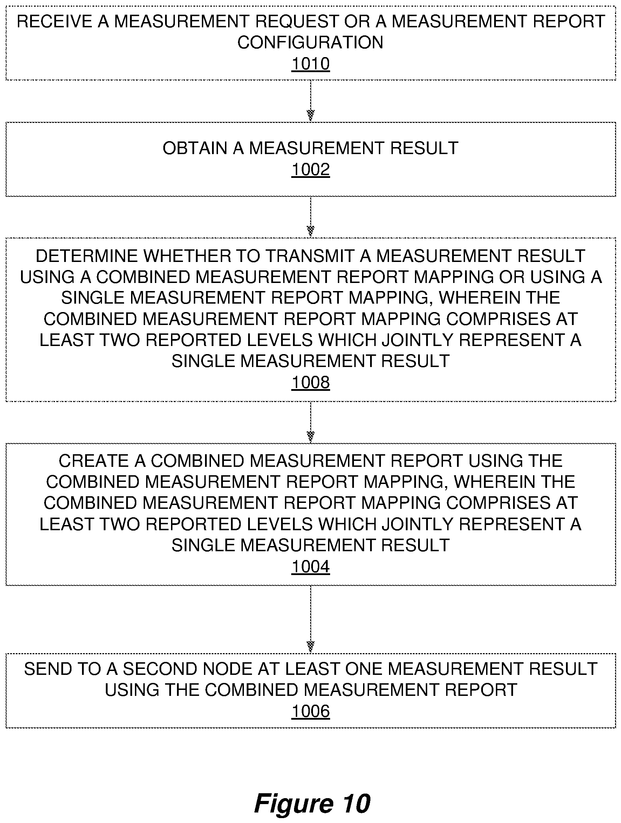

Figure 10 illustrates one or more further embodiments herein in terms of a method in a first node (e.g., reporting node 110) for transmitting measurement results to a second node (e.g., recipient node 120). As shown, the method comprises obtaining a measurement result (Block 1002) (e.g., performing a radio measurement or receiving a measurement result from another node). The measurement can be any measurement. The method also comprises creating a combined measurement report using a combined measurement report mapping (Block 1004). The combined measurement report mapping comprises at least two reported levels which jointly represent a single measurement result. The method further comprises sending to the second node at least one measurement result using the combined measurement report (Block 1006). In other embodiments, the order of the steps is different and/or includes additional steps.

More specifically for these embodiments, a combined measurement report mapping comprises at least two reported levels (e.g., R1 and R2), which jointly represent a single measurement result (e.g., M). In some embodiments, the reported measurement result (e.g., R) is uniquely derived as a function of R1 and R2: R=f(R1,R2). There may be, however, one or more combinations of (R1, R2) which can map to a single value R. There is also a relation between M and R. For example, R may be derived from M by rounding to the closest integer, closest integer so that R<M, closest integer so that R>M, closest value from a pre-defined table, etc. Hence, the relation may be described in more general terms as follows:

$$M \rightarrow R \rightarrow (R1, R2, ..., Rn),$$

$$R = f(R1, R2, ..., Rn)$$

A combined measurement report is based on a combined measurement report mapping. The term 'combined measurement report mapping' or 'combined measurement reporting range' may also interchangeably be referred to as multi-level (or M-level) report mapping or composite report mapping.

In one embodiment, R1 is a reference level, and R2 is a relative level with respect to the reference level. For example, R may be described mathematically as:

$$R = R1 + R2$$

or

$$R = R1 - R2$$

In another embodiment, R1 is based on a first pre-defined table, R1 is a closest level (from the first table) to M, and R2 is based on a second pre-defined table so that: $R = R1 + R2$, where R is the closest level to M among combinations (R1,R2).

Thus, the selection of (R1,R2) may be described, e.g., as minimizing the absolute difference between M and R:

$$abs(M - R) = abs(M - (R1, R2)) \rightarrow min$$

In yet another embodiment, R2 (when R=f(R1,R2)) is used to increase the resolution of a reportable value to represent measurement M, compared to the case when R would be based on the first table only (e.g., R=f(R1)). That is, the first table contains at least one R1' and one R1", so that R1'<R1<R1", and R1'<R1<f(R1,R2)<R1".

In yet another example, R2 is used to extend the upper range of a reportable value to represent measurement M. That is, f(R1,R2)>R1=max{R1'}, where max{R1'} is the maximum value from the first table. In yet another example, R2 is used to extend the lower range of a reportable value to represent measurement M. That is, f(R1,R2)<R1=min{R1'}, where min{R1'} is the minimum value from the first table.

As explained above, Figures 5A-5C and Figures 6A-6B also represent examples of a combined measurement report mapping.

In some embodiments, the first node always transmits a combined measurement report in order to report a measurement. In other embodiments, the first node selectively decides to do so. As shown in Figure 10, for example, the method at the first node in some embodiments further include determining whether to transmit the measurement result using the combined measurement report mapping or using a single measurement report mapping. The determination may be based on one or more criteria. For example, determination criteria may include a measurement type e.g. use combined report for OTDOA RSTD, use combined report for any positioning measurement. Determination criteria may alternatively or additionally include a received measurement request or another signaling from another node. Determination criteria may alternatively or additionally include measurement quality or measurement accuracy, and/or positioning quality or positioning accuracy. Determination criteria may alternatively or additionally include a measurement requirement e.g. use combined report if the measurement accuracy is worse than a threshold and/or if signal quality is below a threshold. This is because a combined report will ensure lower overall error due to smaller quantization error. For example if RSRP is measured at SINR $\leq<$ - 3dB then the first node always sends the report using the combined measurement report mapping. Determination criteria may alternatively or additionally include measurement purpose (e.g., higher granularity when the measurement is intended for purpose A while a worse granularity may be acceptable for purpose B). For example, criteria may include if the measurement is used for specific purpose. Examples of such purposes are positioning or particular type of positioning like indoor positioning or positioning for emergency calls, critical MTC which requires measurements with higher reliability, etc. Determination criteria may alternatively or additionally include environment type or deployment scenario e.g. indoor, outdoor, small cell, larger cell, suburban or rural, urban (e.g., higher granularity and combined measurement reporting can be used in indoor environment).

Determination criteria may alternatively or additionally include radio conditions or radio environment e.g. radio channel with larger delay spread of multi-paths, radio channel with higher Doppler. For example the first node may use combined report measurement report mapping to enable better resolution when radio conditions are more difficult or harsher e.g. delay spread is above a threshold and/or Doppler speed is higher. This is because under harsher conditions the measurement accuracy becomes worse.

Determination criteria may alternatively or additionally include a release of the first node (e.g., from Release N only combined measurement reporting mapping is used, while a single measurement report mapping is used before Release N). Determination criteria may alternatively or additionally include a type of receiving node e.g. whether the target node receiving the report is a UE or a network node.

Determination criteria may alternatively or additionally include whether at least one of the levels (R1,R2,...,Rn) meets one or more conditions or at least one characteristic of the radio conditions in which the measurement is performed meets one or more criteria (e.g., better granularity may be needed for the measurements performed in better radio conditions and a worse granularity may be acceptable for the measurements typical for worse radio conditions such as better granularity for RSRP>-70dBm or for RSRQ >-6 dB or for Rx-Tx<1000Ts, etc).

Determination criteria may alternatively or additionally include available resources or overheads for signaling measurement results. For example, use combine reports if there sufficient resources to report measurement results. Otherwise, if they are limited resources then the first node may use signal measurement report mapping.

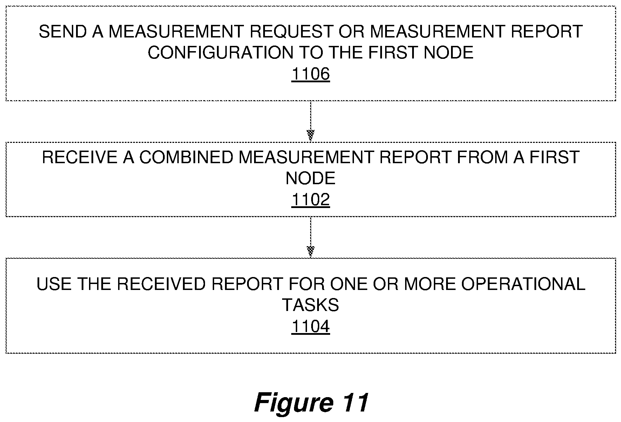

Embodiments herein also include a corresponding method in the second node (e.g., the recipient node 120). Figure 11 in this regard shows such a method. The method includes receiving a combined measurement report from a first node, e.g., via higher layers such as via RRC, LPP, LPPa, X2, proprietary protocols, etc. (Block 1102). The combined measurement report may be based on a combined measurement report mapping that comprises at least two reported levels which jointly represent a single measurement result. The method also includes using the received report for one or more operational tasks (Block 1104).

In one embodiment, for example, the second (receiving) node may derive or assemble the reported measurement value (e.g., R) from the received combined measurement report (comprising, e.g., R1 and R2) and use the result of deriving or assembling for one or more operational tasks.

In another embodiment, the second (receiving) node may directly use (e.g., using R1 and R2 and not deriving R) the values from the received combined measurement report for one or more operational tasks.

Some examples of the operational tasks in this regard may include determining the location of the first node, storing at least one of the extracted values (e.g., R1 and R2) and the derived values (e.g., R) from the received measurement report in an internal or external database, signaling to yet another node, using the results for performing mobility e.g. cell change, handover etc, RRM operation (e.g. adjusting one or more parameters related to scheduling, power control, admission control), SON (e.g. tuning of parameters used in the network nodes such as transmit power level), and/or MDT (e.g. for network planning and deployment of new nodes, upgrading existing nodes etc.). These operations are explained in more detail below.

As shown in Figure 11, in some embodiments, the method at the second node may further include sending a measurement request to the first node or a measurement report configuration (Block 1106). Correspondingly, Figure 10 shows that the method at the first node may further include receiving a measurement request or a measurement report configuration (Block 1010).

In one or more embodiments, the measurement request comprises one or more of a measurement configuration, assistance data for performing measurements, desired or requested measurement accuracy or positioning accuracy, positioning method, etc.

In one or more embodiments, the measurement request comprises at least one parameter associated with measurement reporting. In one example, the request is indicative of how the measurement should be reported, e.g., using combined mapping or not. That is, the parameter may be indicative of whether the measurement reporting should be based on a single measurement report mapping or a combined measurement report mapping. In a further example, the parameter is a binary indicator.

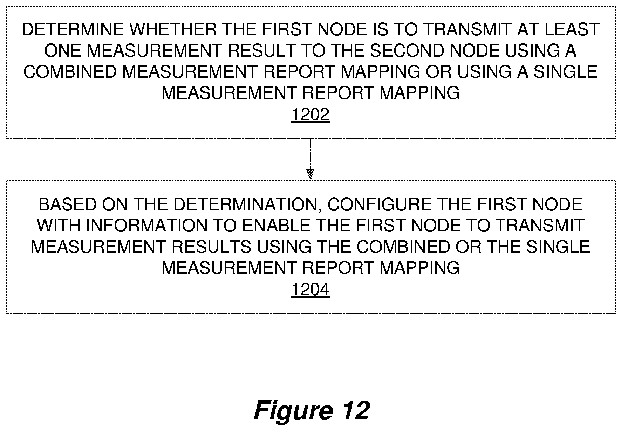

Embodiments herein further include a method performed by a configuring node, which may be the second node or a different node. As shown in Figure 12, the method comprises determining whether the first node is to transmit at least one measurement result to the second node using the combined measurement report mapping or using the single measurement report mapping (Block 1202). The third node's determination in Block 1202 may be performed as described above for the first node's determination in Block 1008. Regardless, the method also comprises, based on the determination, configuring the first node with information to enable the first node to transmit measurement results using the combined or the single measurement report mapping (Block 1204).

Some examples of the first node, second node, and third node include a wireless device or a radio network node or radio node in general; a network node; a measuring node (i.e., a node capable of performing radio measurements itself); a node receiving radio measurement results from another node, but not necessarily capable of performing radio measurements itself). Note that the second and the third nodes may or may not be the same.

Based on the above, it can be seen that any combination of (first node; second node; third node) is possible, e.g.: (UE; eNodeB; eNodeB), (UE; positioning node; positioning node), (UE; positioning node; eNodeB), (eNodeB; eNodeB; O&M or coordinating node), etc. In some embodiments, only the combination (first node; second node) applies.

One or more embodiments provide advantages including: (i) UE and network nodes to use combined measurement report mapping; (ii) reducing signaling overhead on the average; (iii) simplifying the standardizing of enhanced measurement report mapping, e.g., to extend the mapping beyond the existing range or to enable finer granularity measurement reporting; and (iv) adaptive resolution of the reported measurement results, i.e. by the virtue of combined report mapping the same measurement results can be reported with better granularity or resolution if the results are required for a task requiring more precision e.g. positioning for emergency services etc. Otherwise the results can be reported with single report mapping with fewer signaling overheads.

Note that any two or more embodiments described below may be combined in any way with each other.

One or more embodiments are applicable in the specific contexts as described below. For example, specific measurement types are described which may be reported in a manner described with respect to one or more embodiments.

For example, embodiments are described in the context of LTE, but embodiments are not limited to LTE, and may apply with any Radio Access Network (RAN), single- or multi-RAT. Some other RAT examples are LTE-Advanced, UMTS, HSPA, GSM, cdma2000, WiMAX, and WiFi.

Radio measurements are performed by radio nodes (e.g., UE, eNodeB or LMU) on received radio signals. In LTE the measurements are done for various purposes e.g. RRM, mobility, positioning, SON, MDT, etc. The same measurement may be performed for one or more purposes. In addition, measurements may be pattern-based measurements, e.g., performed according to a certain time and/or frequency pattern (e.g., measurement gap pattern, time-domain measurement resource restriction pattern for DL and/or UL measurements, measurement cycle pattern for measurements on SCells with CA, etc.). The measurement may also be performed over a certain bandwidth (e.g., wideband RSRQ measurements or measurements performed over a configured measurement bandwidth which may be smaller than the system bandwidth). The measurements may be with or without CA (see the section on multi-carrier networks for details on CA).

For LTE, most of the physical-layer measurements are specified in 3GPP TS 36.214. There may also be Layer 2 measurements, e.g., specified in 3GPP TS 36.314.

UE measurements are classified as intra-/inter-frequency, intra-/inter-RAT, intra-/inter-band. It is typical for all UEs to support all intra-RAT measurements (i.e. inter-frequency and intra-band measurements) and meet the associated requirements. However the inter-band and inter-RAT measurements are UE capabilities, which are reported to the network during the call setup.

For eNodeB, it is typically assumed that eNodeB is able to perform measurements for multiple UEs over all declared frequencies, RATs, and frequency bands. However, this is costly for the eNodeBs (since the eNodeB implementation needs then to cover a wide range of scenarios) and requires high complexity to implement all measurement combinations over declared configurations.

One or more embodiments include results of intra-LTE mobility measurements (intra-, inter-frequency, CA): (i) RSRP; (ii) RSRQ (iii) RS-SINR.

One or more embodiments include results of inter-RAT mobility measurements: (i) UTRAN CPICH RSCP; (ii) UTRAN CPICH Ec/No; (iii) GSM carrier RSSI; (iv) CDMA2000 Pilot Strength; (v) HRPD Pilot Strength.

Some examples of timing measurements are RTT, TOA, UL RTOA, TDOA, RSTD, UE Rx-Tx, eNodeB Rx-Tx, SFN-SFN timing, one-way propagation delay, timing advance measurement.

The following positioning measurements are possible with enhanced cell ID and OTDOA positioning methods since release 9: UE Rx-Tx time difference measurement, eNodeB Rx-Tx time difference measurement, Timing advance (TA) measurement, Angle of Arrival (AoA), Reference signal time difference (RSTD) for OTDOA, RSRP and RSRQ

In relation to indoor positioning work in LTE, also some new measurements are currently being discussed, e.g. WiFi and Bluetooth RSSI measurements, barometric pressure measurements, measurements based on emulated signals transmitted by beacons (e.g., terrestrial beacon system transmitters).

The minimization of drive test (MDT) feature has been introduced in LTE and HSPA release 10. The MDT feature provides means for reducing the effort for operators when gathering information for the purpose of network planning and optimization. The MDT feature requires that the UEs log or obtain various types of measurements, events and coverage related information. The logged or collected measurements or relevant information are then sent to the network. This is in contrast to the traditional approach where the operator has to collect similar information by means of the so called drive tests and manual logging. The MDT is described in TS 37.320.

The UE can collect the measurements during connected as well as in low activity states e.g. idle state in UTRA/E-UTRA, cell PCH states in UTRA etc.

The measurement report consists of measurement results for the serving cell and neighbour cells, intra-frequency/inter-frequency/inter-RAT, time stamp and location information or radio fingerprinting measurements. The measurements may be collected in idle state (logged MDT) or CONNECTED state (immediate MDT). For immediate MDT, also eNodeB measurements may be included in MDT reports.

Types of measurement reports for MDT include: (i) mobility measurements e.g. RSRP and RSRQ for E-UTRA, RSCP and Ec/No for UTRA, Pilot Pn Phase and Pilot Strength for CDMA2000, etc.; (ii) radio link failure report; (iii) number of Random Access Preambles transmitted, indication whether the maximum transmission power was used, number of Msg3's sent, contention detected; (iv) power headroom measurement by the UE [TS 36.213]; (v) received interference power measurement by eNodeB [TS 36.214]; (vi) data volume measurement separately for DL and UL by eNodeB; (vii) scheduled IP throughput separately for DL and UL by eNodeB [TS 36.314].

The E-UTRAN employs the concept of self-organizing network (SON). The objective of the SON entity is to allow operators to automatically plan and tune the network parameters and configure the network nodes.

The conventional method is based on manual tuning, which consumes enormous amount of time, resources and requires considerable involvement of work force. In particular due to the network complexity, large number of system parameters, IRAT technologies etc. it is very attractive to have reliable schemes and mechanism which could automatically configure the network whenever necessary. This can be realized by SON, which can be visualized as a set of algorithms and protocols performing the task of automatic network tuning, planning, configuration, parameter settings etc. In order to accomplish this, the SON node requires measurement reports and results from other nodes e.g. UE, base station etc.

Embodiments include radio measurements performed by a device based on a radio signal transmitted by another device. Such measurements are also referred to as peer-to-peer/D2D/ProSe measurements.

Several positioning methods exist for determining the location of a target device, which can be any of the wireless device or UE, mobile relay, PDA, wireless device for machine type communication (aka machine to machine communication), laptop mounting wireless devices or equipment, etc. The position of the target device is determined by using one or more positioning measurements, which can be performed by a suitable measuring node or the target device. Depending upon the positioning method used the measuring node can either be the target device itself, a separate radio node (i.e. a standalone node), serving and/or neighboring nodes of the target device etc. Also depending upon the positioning method the measurements can be performed by one or more types of measuring nodes.

The LTE architecture explicitly supports location services by defining the Evolved Serving Mobile Location Center (E-SMLC) that is connected to the core network (i.e. Mobility Management Entity (MME)) via the so called LCS-AP interface and the Gateway Mobile Location Center (GMLC) that is connected to the MME via the standardized Lg interface. The LTE system supports a range of methods to locate the position of the target devices (e.g. UEs) within the coverage area of the RAN. These methods differ in accuracy and availability. Typically, satellite based methods (Assisted GNSS) are accurate with a (few) meter(s) of resolution, but may not be available in indoor environments. On the other hand, Cell ID based methods are much less accurate, but have high availability. Therefore, LTE uses A-GPS as the primary method for positioning, while Cell-ID and OTDOA based schemes serve as fall-back methods.

In LTE the positioning node (aka E-SMLC or location server) configures the target device (e.g. UE), eNode B or a radio node dedicated for positioning measurements (e.g. LMU) to perform one or more positioning measurements depending upon the positioning method. The positioning measurements are used by the target device or by a measuring node or by the positioning node to determine the location of the target device. In LTE the positioning node communicates with UE using LTE positioning protocol (LPP) and with eNode B using LTE positioning protocol annex (LPPa).

Three key network elements in an LTE positioning architecture are the LCS Client, the LCS target and the LCS Server. The LCS Server is a physical or logical entity managing positioning for a LCS target device by collecting measurements and other location information, assisting the terminal in measurements when necessary, and estimating the LCS target location. A LCS Client is a software and/or hardware entity that interacts with a LCS Server for the purpose of obtaining location information for one or more LCS targets, i.e. the entities being positioned. LCS Clients may also reside in the LCS targets themselves. An LCS Client sends a request to LCS Server to obtain location information, and LCS Server processes and serves the received requests and sends the positioning result and optionally a velocity estimate to the LCS Client. A positioning request can be originated from the terminal or a network node or external client.

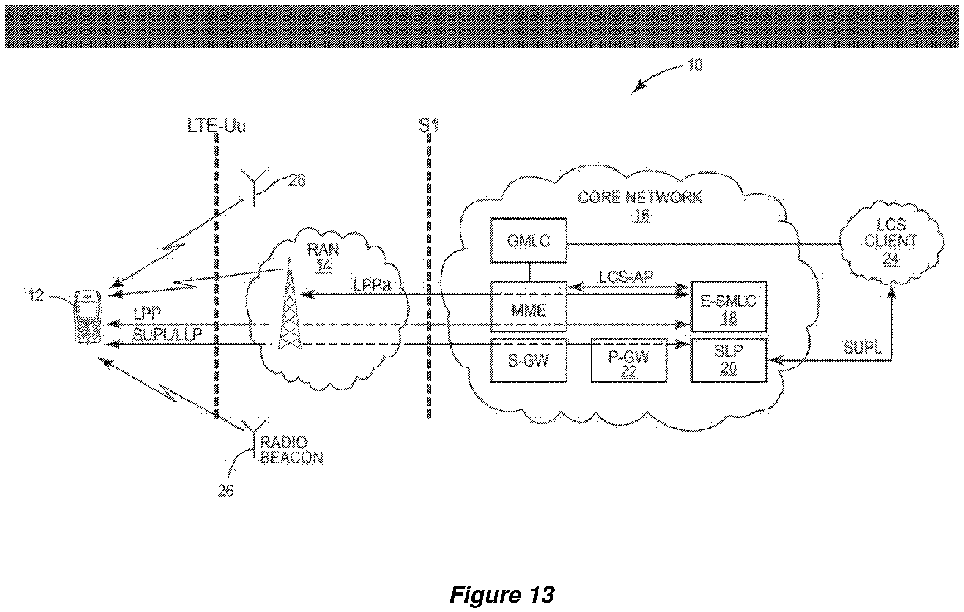

An example LTE positioning architecture where one or more embodiments apply is shown in Figure 13. In Figure 13, the system 10 includes a UE 12, a radio access network (RAN) 14, and a core network 16. The UE 12 comprises the LCS target. The core network 16 includes an E-SMLC 18 and/or an SLP 20, either of which may comprise the LCS Server. The control plane positioning protocols with the E-SMLC 14 as the terminating point include LPP, LPPa, and LCS-AP. The user plane positioning protocols with the SLP 16 as the terminating point include SUPL/LPP and SUPL. Although note shown, the SLP 20 may comprise two components, a SUPL Positioning Center (SPC) and a SUPL Location Center (SLC), which may also reside in different nodes. In an example implementation, the SPC has a proprietary interface with E-SMLC, and an Llp interface with the SLC. The SLC part of the SLP communicates with a P-GW (PDN-Gateway) 22 and an External LCS Client 24.

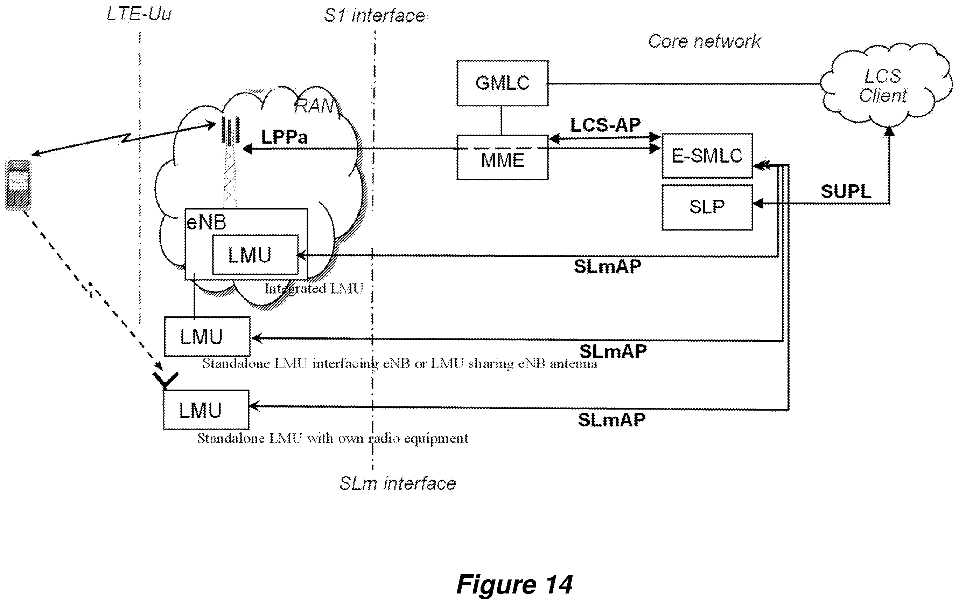

Another example is depicted in Figure 14. Figure 14 illustrates an architecture for UL positioning (e.g. UTDOA). Although UL measurements may in principle be performed by any radio network node (e.g., eNodeB), UL positioning architecture may include specific UL measurement units (e.g., LMUs) which e.g. may be logical and/or physical nodes, may be integrated with radio base stations or sharing some of the software or hardware equipment with radio base stations or may be completely standalone nodes with own equipment (including antennas). There is an interface, SLm, between the E-SMLC and LMU. The interface is terminated between a positioning server (E-SMLC) and LMU. It is used to transport SLmAP protocol (new protocol being specified for UL positioning) messages over the E-SMLC-to-LMU interface. Several LMU deployment options are possible. For example, an LMU may be a standalone physical node, it may be integrated into eNodeB or it may be sharing at least some equipment such as antennas with eNodeB - these three options are illustrated in the Figure 8. Positioning measurements may be performed on DL radio signals (e.g., CRS or PRS) or signals transmitted by a radio network node, UL radio signals (e.g., Sounding Reference Signals, SRS) or signals transmitted by a wireless device to a network or another wireless device, or satellite radio signals. The measurements may be intra-frequency, inter-frequency, or inter-RAT. Positioning measurements are performed by a measuring node, which may be a wireless device, a radio base station, or other radio nodes (e.g., LMUs).

Position calculation can be conducted, for example, by a positioning server (e.g. E-SMLC or SLP in LTE) or UE. The former approach corresponds to the UE-assisted positioning mode when it is based on UE measurements, whilst the latter corresponds to the UE-based positioning mode.

Note that a wireless device and UE are used interchangeably in the description. A UE includes any device equipped with a radio interface and capable of at least generating and transmitting a radio signal to a radio network node. Note that even some radio network nodes, e.g., a relay, an LMU, or a femto BS (aka home BS), may also be equipped with a UE-like interface. Some example of "UE" that are to be understood in a general sense are PDA, laptop, mobile, sensor, fixed relay, mobile relay, tablet, MTC or M2M device, any radio network node equipped with a UE-like interface (e.g., small RBS, eNodeB, femto BS).

A radio node is characterized by its ability to transmit and/or receive radio signals and it comprises at least a transmitting or receiving antenna. A radio node includes a UE or a radio network node. Some examples of radio nodes are a radio base station (e.g., eNodeB in LTE or NodeB in UTRAN), a relay, a mobile relay, remote radio unit (RRU), remote radio head (RRH), tablet, MTC or M2M device, a sensor, a beacon device, a measurement unit (e.g., LMUs), user terminal, PDA, mobile, iPhone, laptop, etc.

A measuring node is a radio node performing measurements on radio signals. Depending on the embodiments, the measuring node may perform measurements on DL signals (e.g., a wireless device or a radio network node equipped with a UE-like interface, relay, etc.) or UL signals (e.g., a radio network node in general, eNodeB, WLAN access point, LMU, etc.).

A radio network node is a radio node comprised in a radio communications network and is typically characterized by its own or an associated network address. For example, a mobile equipment in a cellular network may have no network address, but a wireless device involved in an ad hoc network is likely to have a network address. A radio node may be capable of operating or receiving radio signals or transmitting radio signals in one or more frequencies, and may operate in single-RAT, multi-RAT or multi-standard mode (e.g., an example dual-mode user equipment may operate with any one or combination of WiFi and LTE or HSPA and LTE/LTE-A). A radio network node, including eNodeB, RRH, RRU, or transmitting-only/receiving-only nodes, may or may not create its own cell and may comprise in some examples a transmitter and/or a receiver and/or one or more transmit antennas or one and/or more receive antennas, where the antennas are not necessarily co-located. It may also share a cell with another radio node which creates its own cell. More than one cell may be associated with one radio node. Further, one or more serving cells (in DL and/or UL) may be configured for a UE, e.g., in a carrier aggregation system where a UE may have one Primary Cell (PCell) and one or more Secondary Cells (SCells). Further, one or more serving cells (in DL and/or UL) may be configured for a UE in a multi-connectivity system, e.g., in a dual connectivity (DC) system where a UE may have at least one Primary Cell (PCell) from a first network node and at least one primary secondary cell (PSCell) from a second network node and optionally or more Secondary Cells (SCells) from the first and/or the second network nodes.

A network node includes any radio network node or core network node. Some nonlimiting examples of a network node are an eNodeB, RNC, positioning node, MME, PSAP, SON node, MDT node, (typically but not necessarily) coordinating node, and O&M node.

A positioning node described in different embodiments is a node with positioning functionality. For example, for LTE it may be understood as a positioning platform in the user plane (e.g., SLP in LTE) or a positioning node in the control plane (e.g., E-SMLC in LTE). SLP may also consist of SLC and SPC, where SPC may also have a proprietary interface with E-SMLC. Positioning functionality may also be split among two or more nodes, e.g., there may be a gateway node between LMUs and E-SMLC, where the gateway node may be a radio base station or another network node; in this case, the term positioning node may relate to E-SMLC and the gateway node. In a testing environment, a positioning node may be simulated or emulated by test equipment.

A coordinating node described in different embodiments is a network and/or node, which coordinates radio resources with one or more radio nodes. Some examples of the coordinating node are network monitoring and configuration node, OSS node, O&M, MDT node, SON node, positioning node, MME, a gateway node such as Packet Data Network Gateway (P-GW) or Serving Gateway (S-GW) network node or femto gateway node, a macro node coordinating smaller radio nodes associated with it, eNodeB coordinating resources with other eNodeBs, etc.

The signaling described herein includes signaling via direct links or logical links (e.g. via higher layer protocols and/or via one or more network and/or radio nodes). For example, signaling from a coordinating node may pass another network node, e.g., a radio network node.

Measurement includes a radio signal measurement, e.g., as described in Section 2.1.1 below, which may be a DL measurement, an UL measurement, a bi-directional measurement (e.g., Rx-Tx or RTT), a peer-to-peer or D2D or ProSe measurement, etc.

In view of the above modifications and variations, it will be understand that embodiments herein also include a reporting node, a recipient node, and a configuring node. The reporting node is configured, e.g., via any functional means or units, to implement the processing described above. The reporting node includes for instance a transmitting means or unit for transmitting the reported values and an optional receiving means or unit for receiving a reporting configuration.

Embodiments also include a recipient node. The recipient node is configured, e.g., via any functional means or units, to implement the processing described above. The recipient node includes for instance a receiving means or unit for receiving the reported values and/or a reporting configuration and an optional transmitting means or unit for transmitting a reporting request or configuration.

Embodiments also include a configuring node. The configuring node is configured, e.g., via any functional means or units, to implement the processing described above. The configuring node includes for instance a transmitting means or unit for transmitting a reporting configuration and an optional receiving means or unit for receiving information for making determinations to transmit a reporting configuration.

In at least some embodiments, a node as described above comprises one or more processing circuits configured to implement the above processing, such as by implementing corresponding functional means or units. In one embodiments, for example, the node's processing circuit(s) implement functional means or units as respective circuits. The circuits in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more for carrying out one or more microprocessors, carries out the techniques described herein.

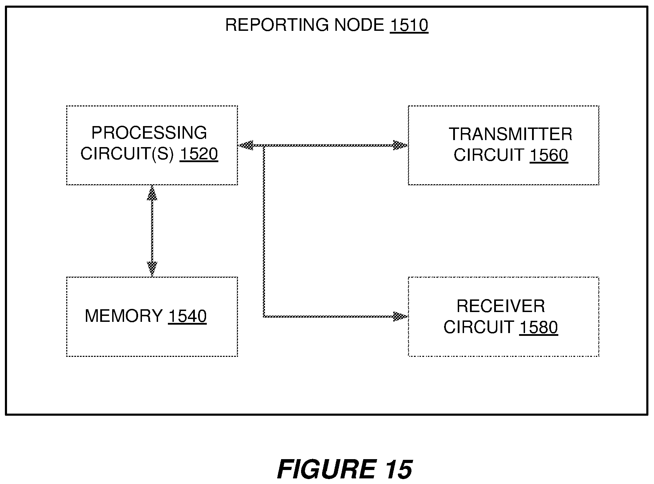

Figure 15 more particularly illustrates a reporting node 1510 according to some embodiments. As shown, the reporting node 1510 includes one or more processing circuits 1520, memory 1540, and a transmitter circuit 1560. The reporting node 1510 may also include a receiver circuit 1580. The one or more processing circuits 1520 control the operation of the reporting node 1510 to perform functionality described above, such as that in Figure 2, e.g., via the transmitter 1560 and receiver circuits 1580.

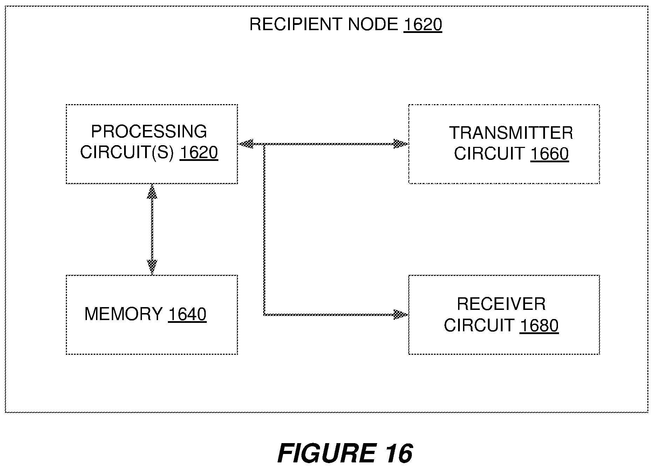

Figure 16 more particularly illustrates a recipient node 1610 according to some embodiments. As shown, the recipient node 1610 includes one or more processing circuits 1620, memory 1640, and a receiver circuit 1680. The recipient node 1610 may also include a transmitter circuit 1660. The one or more processing circuits 1620 control the operation of the recipient node 1610 to perform functionality described above, such as that in Figure 7, e.g., via the transmitter 1660 and receiver circuits 1680.

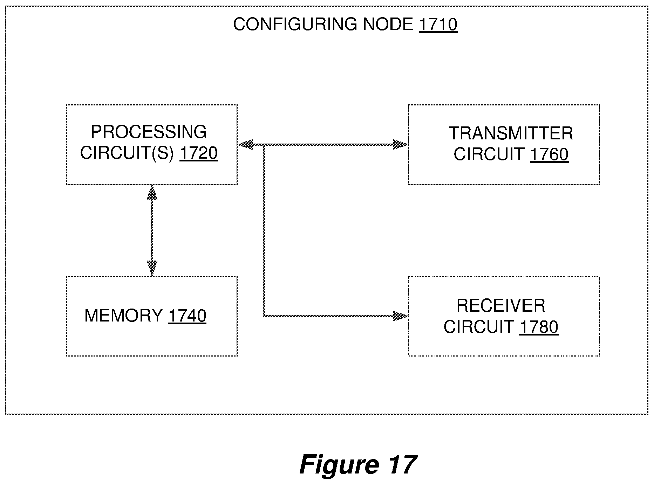

Figure 17 more particularly illustrates a configuring node 1710 according to some embodiments. As shown, the configuring node 1710 includes one or more processing circuits 1720, memory 1740, and a transmitter circuit 1760. The configuring node 1710 may also include a receiver circuit 1780. The one or more processing circuits 1720 control the operation of the configuring node 1710 to perform functionality described above, such as that in Figure 9, e.g., via the transmitter 1760 and receiver circuits 1780.

The circuits described above may comprise one or more processors, hardware circuits, firmware or a combination thereof. The device in this regard may comprise memory that includes one or more volatile and/or non-volatile memory devices. Program code for controlling operation of the device may be stored in a non-volatile memory, such as read-only memory or flash memory. Temporary data generated during operation may be stored in random access memory. Program code stored in memory, when executed by the processing circuit(s), causes the processing circuit(s) to perform the methods shown above.

Embodiments herein thereby further include a computer program comprising instructions, which when executed on at least one processor of a node, cause the node to carry out the method(s) above. Embodiments further include a carrier containing such a computer program, where the carrier is one of an electrical signal, an optical signal, a radio signal, or a computer readable storage medium.

Embodiments of course also include a system that includes the nodes described herein.

## Claims

1. A method, implemented by a reporting node (110, 810, 1510), for reporting the result of a radio signal measurement to a recipient node (120, 820, 1620), the method comprising:

   obtaining (202), at the reporting node (110, 810, 1510), the result of a radio signal measurement;
   obtaining (204), at the reporting node (110, 810, 1510), a joint mapping in which different possible values for a first reporting variable and different possible values for a second reporting variable are jointly mapped to different possible values for the result of the radio signal measurement, wherein the different possible values for the first reporting variable correspond to different ranges of results of the radio signal measurement, and the different possible values for the second reporting variable correspond to different delta values by which to increment or decrement a component of a range of measurement results reported with the first reporting variable;
   mapping (206) the result of the radio signal measurement to multiple reported values that jointly represent that result, using the obtained joint mapping, wherein the multiple reported values include one of the different possible values for the first reporting variable and one of the different possible values for the second reporting variable; and
   reporting (208) the result of the radio signal measurement to the recipient node (120, 820, 1620) by sending the multiple reported values from the reporting node (110, 810, 1510) to the recipient node (120, 820, 1620).

2. The method of claim 1, further comprising dynamically determining whether the reporting node (110, 810, 1510) is to map the result of the radio signal measurement to the multiple reported values using the joint mapping or to a single reported value using a single mapping, wherein the single mapping maps different possible values for a single reporting variable to different possible values for the result of the radio signal measurement.

3. The method of claim 2, wherein said dynamically determining is performed based on: an accuracy or quality of the radio signal measurement, radio conditions, a type of radio environment, or a radio deployment scenario in which the radio signal measurement is performed.

4. A method, implemented by a recipient node (120, 820, 1620), for determining the result of a radio signal measurement as reported by a reporting node (110, 810, 1510), the method comprising:

receiving (704), at the recipient node (120, 820, 1620), multiple reported values that jointly represent a reported result of the radio signal measurement, wherein the multiple reported values comprise one of different possible values for a first reporting variable and one of different possible values for a second reporting variable, wherein the different possible values for the first reporting variable and the different possible values for the second reporting variable are jointly mapped to different possible values for the reported result of the radio signal measurement, wherein the different possible values for the first reporting variable correspond to different ranges of results of the radio signal measurement, and the different possible values for the second reporting variable correspond to different delta values by which to increment or decrement a component of a range of measurement results reported with the first reporting variable; and performing (706) one or more operations based on the multiple reported values.

5. The method of claim 4, further comprising:

obtaining (702), at the recipient node (120, 820, 1620), a joint mapping in which the different possible values for the first reporting variable and different possible values for the second reporting variable are jointly mapped to different possible values for the reported result of the radio signal measurement; mapping the multiple reported values to one of the different possible values for the reported result of the radio signal measurement, using the obtained joint mapping; and performing the one or more operations based on the reported result.

6. The method of any of claims 1-5, wherein the different possible values for the first reporting variable are mapped to different possible values for the reported result of the radio signal measurement at a first resolution, and the different possible values for the second reporting variable are mapped to different possible values for the reported result of the radio signal measurement at a second resolution higher than the first resolution.

7. The method of any of claims 4-6, further comprising dynamically determining whether to map the one or more reported values to the reported result of the radio signal measurement using the joint mapping or to map a single reported value to the reported result of the radio signal measurement using a single mapping, wherein the single mapping maps different possible values for a single reporting variable to different possible values for the result of the radio signal measurement.

8. The method of claim 7, wherein said dynamically determining is performed based on an accuracy or quality of the radio signal measurement, radio conditions, a type of radio environment, or a radio deployment scenario in which the radio signal measurement is performed.

9. The method of any of claims 1-8, wherein said joint mapping is embodied across a first mapping table for the first reporting variable and a second mapping table for the second reporting variable.

10. A reporting node (110, 810, 1510) configured to report the result of a radio signal measurement to a recipient node (120, 820, 1620), the reporting node (110, 810, 1510) configured to:

obtain the result of a radio signal measurement; obtain a joint mapping in which different possible values for a first reporting variable and different possible values for a second reporting variable are jointly mapped to different possible values for the result of the radio signal measurement, wherein the different possible values for the first reporting variable correspond to different ranges of results of the radio signal measurement, and the different possible values for the second reporting variable correspond to different delta values by which to increment or decrement a component of a range of measurement results reported with the first reporting variable; map the result of the radio signal measurement to multiple reported values that jointly represent that result, using the obtained joint mapping, wherein the multiple reported values include one of the different possible values for the first reporting variable and one of the different possible values for the second reporting variable; and report the result of the radio signal measurement to the recipient node (120, 820, 1620) by sending the multiple reported values from the reporting node (110, 810, 1510) to the recipient node (120, 820, 1620).

11. The reporting node of claim 10, configured to perform the method of any of claims 2-3, 6, or 9.

12. A recipient node (120, 820, 1620) configured to determine the result of a radio signal measurement as reported by a reporting node (110, 810, 1510), the recipient node (120, 820, 1620) configured to:

receive multiple reported values that jointly represent a reported result of the radio signal measurement, wherein the multiple reported values comprise one of different possible values for a first reporting variable and one of different possible values for a second reporting variable, wherein the different possible values for the first reporting variable and the different possible values for the second reporting variable are jointly mapped to different possible values for the reported result of the radio signal measurement, wherein the different possible values for the first reporting variable correspond to different ranges of results of the radio signal measurement, and the different possible values for the second reporting variable correspond to different delta values by which to increment or decrement a component of a range of measurement results reported with the first reporting variable; and perform one or more operations based on the multiple reported values.

13. The recipient node of claim 12, configured to perform the method of any of claims 4-9.

14. The node of any of claims 10 to 13, wherein the reporting node (110, 810, 1510) is a user equipment and the recipient node (120, 820, 1620) is a base station.

15. A computer readable storage medium containing a computer program comprising instructions which, when executed by at least one processor of a node, causes the node to carry out the method of any of claims 1-9.

**Patentansprüche**

1. Verfahren, das durch einen Berichterstattungsknoten (110, 810, 1510) implementiert wird, zum Berichten des Ergebnisses einer Funksignalmessung an einen empfangenden Knoten (120, 820, 1620), das Verfahren umfassend:

Erhalten (202), an dem Berichterstattungsknoten (110, 810, 1510), des Ergebnisses einer Funksignalmessung;
Erhalten (204), an dem Berichterstattungsknoten (110, 810, 1510), einer gemeinsamen Abbildung, in der verschiedene mögliche Werte für eine erste Berichterstattungsvariable und verschiedene mögliche Werte für eine zweite Berichterstattungsvariable gemeinsam auf verschiedene mögliche Werte für das Ergebnis der Funksignalmessung abgebildet werden, wobei die verschiedenen möglichen Werte für die erste Berichterstattungsvariable verschiedenen Ergebnisbereichen der Funksignalmessung entsprechen und die verschiedenen möglichen Werte für die zweite Berichterstattungsvariable verschiedenen Deltawerten entsprechen, um die eine Komponente eines Bereichs von Messergebnissen, die mit der ersten Berichterstattungsvariable berichtet werden, inkrementiert oder dekrementiert werden soll; Abbilden (206) des Ergebnisses der Funksignalmessung auf mehrere berichtete Werte, die dieses Ergebnis gemeinsam repräsentieren, unter Verwendung der erhaltenen gemeinsamen Abbildung, wobei die mehreren berichteten Werte einen der verschiedenen möglichen Werte für die erste Berichterstattungsvariable und einen der verschiedenen möglichen Werte für die zweite Berichterstattungsvariable einschließen; und
Berichten (208) des Ergebnisses der Funksignalmessung an den empfangenden Knoten (120, 820, 1620) durch Senden der mehreren berichteten Werte von dem Berichterstattungsknoten (110, 810, 1510) an den empfangenden Knoten (120, 820, 1620).

2. Verfahren nach Anspruch 1, ferner umfassend dynamisches Bestimmen, ob der Berichterstattungsknoten (110, 810, 1510) das Ergebnis der Funksignalmessung auf die mehreren Berichterstattungswerte unter Verwendung der gemeinsamen Abbildung oder auf einen einzelnen berichteten Wert unter Verwendung einer einzelnen Abbildung abbilden soll, wobei die einzige Abbildung verschiedene mögliche Werte für eine einzige Berichterstattungsvariable auf verschiedene mögliche Werte für das Ergebnis der Funksignalmessung abbildet.

3. Verfahren nach Anspruch 2, wobei das dynamische Bestimmen basierend auf Folgendem durchgeführt wird: einer Genauigkeit oder Qualität der Funksignalmessung, Funkbedingungen, einem Typ von Funkumgebung oder einem Funkeinsatzszenario, in dem die Funksignalmessung durchgeführt wird.

4. Verfahren, das von einem empfangenden Knoten (120, 820, 1620) implementiert wird, zum Bestimmen des Ergebnisses einer Funksignalmessung, wie sie von einem Berichterstattungsknoten (110, 810, 1510) berichtet wird, das Verfahren umfassend:

Empfangen (704), an dem empfangenden Knoten (120, 820, 1620), mehrerer berichteter Werte, die gemeinsam ein berichtetes Ergebnis der Funksignalmessung darstellen, wobei die mehreren berichteten Werte einen von verschiedenen möglichen Werten für eine erste Berichterstattungsvariable und einen von verschiedenen möglichen Werten für eine zweite Berichterstattungsvariable umfassen, wobei die unterschiedlichen möglichen Werte für die erste Berichterstattungsvariable und die unterschiedlichen möglichen Werte für die zweite Berichterstattungsvariable gemeinsam auf unterschiedliche mögliche Werte für das berichtete Ergebnis der Funksignalmessung abgebildet werden, wobei die verschiedenen möglichen Werte für die erste Berichterstattungsvariable verschiedenen Ergebnisbereichen der Funksignalmessung entsprechen und die verschiedenen möglichen Werte für die zweite Berichterstattungsvariable verschiedenen Deltawerten entsprechen, um die eine Komponente eines Bereichs von Messergebnissen, die mit der ersten Berichterstattungsvariable berichtet werden, inkrementiert oder dekrementiert werden soll; und
Durchführen (706) einer oder mehrerer Operationen basierend auf den mehreren berichteten Werten.

5. Verfahren nach Anspruch 4, ferner umfassend:

Erhalten (702), an dem empfangenden Knoten (120, 820, 1620), einer gemeinsamen Abbildung, in der die unterschiedlichen möglichen Werte für die erste Berichterstattungsvariable und die unterschiedlichen möglichen Werte für die zweite Berichterstattungsvariable gemeinsam auf unterschiedliche mögliche Werte für das berichtete Ergebnis der Funksignalmessung abgebildet werden;
Abbilden der mehreren berichteten Werte auf einen der verschiedenen möglichen Werte für das berichtete Ergebnis der Funksignalmessung unter Verwendung der erhaltenen gemeinsamen Abbildung; und
Durchführen der einen oder mehreren Operationen basierend auf dem berichteten Ergebnis.

6. Verfahren nach einem der Ansprüche 1 bis 5, wobei die unterschiedlichen möglichen Werte für die erste Berichterstattungsvariable auf unterschiedliche mögliche Werte für das berichtete Ergebnis der Funksignalmessung mit einer ersten Auflösung abgebildet werden, und die verschiedenen möglichen Werte für die zweite Berichterstattungsvariable auf verschiedene mögliche Werte für das berichtete Ergebnis der Funksignalmessung mit einer zweiten Auflösung abgebildet werden, die höher als die erste Auflösung ist.

7. Verfahren nach einem der Ansprüche 4 bis 6, ferner umfassend dynamisches Bestimmen, ob der eine oder die mehreren berichteten Werte auf das berichtete Ergebnis der Funksignalmessung unter Verwendung der gemeinsamen Abbildung abgebildet werden sollen oder ob ein einzelner berichteter Wert auf das berichtete Ergebnis der Funksignalmessung unter Verwendung einer einzelnen Abbildung abgebildet werden soll, wobei die einzige Abbildung verschiedene mögliche Werte für eine einzige Berichterstattungsvariable auf verschiedene mögliche Werte für das Ergebnis der Funksignalmessung abbildet.

8. Verfahren nach Anspruch 7, wobei das dynamische Bestimmen basierend auf einer Genauigkeit oder Qualität der Funksignalmessung, Funkbedingungen, einem Typ von Funkumgebung oder einem Funkeinsatzszenario, in dem die Funksignalmessung durchgeführt wird, durchgeführt wird.

9. Verfahren nach einem der Ansprüche 1 bis 8, wobei die gemeinsame Abbildung über eine erste Abbildungstabelle für die erste Berichterstattungsvariable und eine zweite Abbildungstabelle für die zweite Berichterstattungsvariable verkörpert wird.

10. Berichterstattungsknoten (110, 810, 1510), der konfiguriert ist, um das Ergebnis einer Funksignalmessung an einen empfangenden Knoten (120, 820, 1620) zu berichten, wobei der Berichterstattungsknoten (110, 810, 1510) konfiguriert ist zum:

Erhalten des Ergebnisses einer Funksignalmessung;
Erhalten einer gemeinsamen Abbildung, in der verschiedene mögliche Werte für eine erste Berichterstattungsvariable und verschiedene mögliche Werte für eine zweite Berichterstattungsvariable gemeinsam auf verschiedene mögliche Werte für das Ergebnis der Funksignalmessung abgebildet werden, wobei die verschiedenen möglichen Werte für die erste Berichterstattungsvariable verschiedenen Ergebnisbereichen der Funksignalmessung entsprechen und die verschiedenen möglichen Werte für die zweite Berichterstattungsvariable verschiedenen Deltawerten entsprechen, um die eine Komponente eines Bereichs von Messergebnissen, die mit der ersten Berichterstattungsvariable berichtet werden, inkrementiert oder dekrementiert werden soll;

Abbilden des Ergebnisses der Funksignalmessung auf mehrere berichtete Werte, die dieses Ergebnis gemeinsam repräsentieren, unter Verwendung der erhaltenen gemeinsamen Abbildung, wobei die mehreren berichteten Werte einen der verschiedenen möglichen Werte für die erste Berichterstattungsvariable und einen der verschiedenen möglichen Werte für die zweite Berichterstattungsvariable einschließen; und Berichten des Ergebnisses der Funksignalmessung an den empfangenden Knoten (120, 820, 1620) durch Senden der mehreren berichteten Werte von dem Berichterstattungsknoten (110, 810, 1510) an den empfangenden Knoten (120, 820, 1620).

11. Berichterstattungsknoten nach Anspruch 10, der konfiguriert ist, um das Verfahren nach einem der Ansprüche 2 bis 3, 6 oder 9 durchzuführen.

12. Empfangender Knoten (120, 820, 1620), der konfiguriert ist, um das Ergebnis einer Funksignalmessung, wie von einem Berichterstattungsknoten (110, 810, 1510) berichtet, zu bestimmen, wobei der empfangende Knoten (120, 820, 1620) konfiguriert ist zum:

Empfangen mehrerer berichteter Werte, die gemeinsam ein berichtetes Ergebnis der Funksignalmessung darstellen, wobei die mehreren berichteten Werte einen von verschiedenen möglichen Werten für eine erste Berichterstattungsvariable und einen von verschiedenen möglichen Werten für eine zweite Berichterstattungsvariable umfassen, wobei die unterschiedlichen möglichen Werte für die erste Berichterstattungsvariable und die unterschiedlichen möglichen Werte für die zweite Berichterstattungsvariable gemeinsam auf unterschiedliche mögliche Werte für das berichtete Ergebnis der Funksignalmessung abgebildet werden, wobei die verschiedenen möglichen Werte für die erste Berichterstattungsvariable verschiedenen Ergebnisbereichen der Funksignalmessung entsprechen und die verschiedenen möglichen Werte für die zweite Berichterstattungsvariable verschiedenen Deltawerten entsprechen, um die eine Komponente eines Bereichs von Messergebnissen, die mit der ersten Berichterstattungsvariable berichtet werden, inkrementiert oder dekrementiert werden soll; und Durchführen einer oder mehrerer Operationen basierend auf den mehreren berichteten Werten.

13. Empfangender Knoten nach Anspruch 12, der konfiguriert ist, um das Verfahren nach einem der Ansprüche 4 bis 9 durchzuführen.

14. Knoten nach einem der Ansprüche 10 bis 13, wobei der Berichterstattungsknoten (110, 810, 1510) eine Benutzereinrichtung ist und der empfangende Knoten (120, 820, 1620) eine Basisstation ist.

15. Computerlesbares Speichermedium umfassend ein Computerprogramm, das Anweisungen umfasst, die, wenn sie durch mindestens einen Prozessor eines Knotens ausgeführt werden, den Knoten veranlassen, das Verfahren nach einem der Ansprüche 1 bis 9 auszuführen.

**Revendications**

1. Procédé, implémenté par un nœud de déclaration (110, 810, 1510), pour déclarer le résultat d'une mesure de signal radio à un nœud destinataire (120, 820, 1620), le procédé comprenant :

l'obtention (202), au niveau du nœud de déclaration (110, 810, 1510), du résultat d'une mesure de signal radio ; l'obtention (204), au niveau du nœud de déclaration (110, 810, 1510), d'un mappage conjoint dans lequel différentes valeurs possibles pour une première variable de déclaration et différentes valeurs possibles pour une deuxième variable de déclaration sont mappées conjointement différentes valeurs possibles pour le résultat de la mesure de signal radio, dans lequel les différentes valeurs possibles pour la première variable de déclaration correspondent à différentes plages de résultats de la mesure de signal radio, et les différentes valeurs possibles pour la deuxième variable de déclaration correspondent à différentes valeurs delta par lesquelles incrémenter ou décrémenter un composant d'une plage de résultats de mesure déclarés avec la première variable de déclaration ; le mappage (206) du résultat de la mesure de signal radio à de multiples valeurs déclarées qui représentent conjointement ce résultat, en utilisant le mappage conjoint obtenu, les multiples valeurs déclarées incluant l'une des différentes valeurs possibles pour la première variable de déclaration et l'une des différentes valeurs possibles pour la deuxième variable de déclaration ; et la déclaration (208) du résultat de la mesure de signal radio au nœud destinataire (120, 820, 1620) en envoyant les multiples valeurs déclarées du nœud de déclaration (110, 810, 1510) au nœud destinataire (120, 820, 1620).

2. Procédé selon la revendication 1, comprenant en outre la détermination dynamique pour savoir si le nœud de déclaration (110, 810, 1510) doit mapper le résultat de la mesure de signal radio aux multiples valeurs déclarées en utilisant le mappage conjoint ou à une valeur déclarée unique en utilisant un mappage unique, dans lequel le mappage unique mappe différentes valeurs possibles pour une variable de déclaration unique à différentes valeurs possibles pour le résultat de la mesure de signal radio.

3. Procédé selon la revendication 2, dans lequel ladite détermination dynamique est mise en œuvre basé sur : une précision ou une qualité de la mesure de signal radio, des conditions radio, un type d'environnement radio ou un scénario de déploiement radio dans lequel la mesure de signal radio est effectuée.

4. Procédé, implémenté par un nœud destinataire (120, 820, 1620), pour déterminer le résultat d'une mesure de signal radio tel que déclaré par un nœud de déclaration (110, 810, 1510), the procédé comprenant :

la réception (704), au niveau du nœud destinataire (120, 820, 1620), de multiples valeurs déclarées qui représentent conjointement un résultat déclaré de la mesure de signal radio, dans lequel les multiples valeurs déclarées comprennent l'une de différentes valeurs possibles pour une première variable de déclaration et l'une de différentes valeurs possibles pour une deuxième variable de déclaration, dans lequel les différentes valeurs possibles pour la première variable de déclaration et les différentes valeurs possibles pour la deuxième variable de déclaration sont mappées conjointement à différentes valeurs possibles pour le résultat déclaré de la mesure de signal radio, dans lequel les différentes valeurs possibles pour la première variable de déclaration correspondent à différentes plages de résultats de la mesure de signal radio, et les différentes valeurs possibles pour la deuxième variable de déclaration correspondent à différentes valeurs delta par lesquelles incrémenter ou décrémenter un composant d'une plage de résultats de mesure déclarés avec la première variable de déclaration ; et
la mise en œuvre (706) d'une ou plusieurs opérations sur la base des multiples valeurs déclarées.

5. Procédé selon la revendication 4, comprenant en outre :

l'obtention (702), au niveau du nœud destinataire (120, 820, 1620), d'un mappage conjoint dans lequel les différentes valeurs possibles pour la première variable de déclaration et différentes valeurs possibles pour la deuxième variable de déclaration sont mappées conjointement à différentes valeurs possibles pour le résultat déclaré de la mesure de signal radio ;
le mappage des multiples valeurs déclarées à l'une des différentes valeurs possibles pour le résultat déclaré de la mesure de signal radio, en utilisant le mappage conjoint obtenu ; et
la mise en œuvre de l'une ou plusieurs opérations sur la base du résultat déclaré.

6. Procédé selon l'une quelconque des revendications 1 à 5, dans lequel les différentes valeurs possibles pour la première variable de déclaration sont mappées à différentes valeurs possibles pour le résultat déclaré de la mesure de signal radio à une première résolution, et les différentes valeurs possibles pour la deuxième variable de déclaration sont mappées à différentes valeurs possibles pour le résultat déclaré de la mesure de signal radio à une deuxième résolution supérieure à la première résolution.

7. Procédé selon l'une quelconque des revendications 4 à 6, comprenant en outre la détermination dynamique pour savoir s'il faut mapper l'une ou plusieurs valeurs déclarées au résultat déclaré de la mesure de signal radio en utilisant le mappage conjoint ou mapper une valeur déclaré unique au résultat déclaré de la mesure de signal radio en utilisant un mappage unique, dans lequel le mappage unique mappe différentes valeurs possibles pour une variable de déclaration unique à différentes valeurs possibles pour le résultat de la mesure de signal radio.

8. Procédé selon la revendication 7, dans lequel ladite détermination dynamique est mise en œuvre sur la base d'une précision ou une qualité de la mesure de signal radio, des conditions radio, d'un type d'environnement radio, ou d'un scénario de déploiement radio dans lequel la mesure de signal radio est mise en œuvre.

9. Procédé selon l'une quelconque des revendications 1 à 8, dans lequel ledit mappage conjoint est réalisé sur une première table de mappage pour la première variable de déclaration et une deuxième table de mappage pour la deuxième variable de déclaration.

10. Nœud de déclaration (110, 810, 1510) configuré pour déclarer le résultat d'une mesure de signal radio à un nœud destinataire (120, 820, 1620), le nœud de déclaration (110, 810, 1510) configuré pour :

obtenir le résultat d'une mesure de signal radio ;
obtenir un mappage conjoint dans lequel différentes valeurs possibles pour une première variable de déclaration et différentes valeurs possibles pour une deuxième variable de déclaration sont mappées conjointement à différentes valeurs possibles pour le résultat de la mesure de signal radio, dans lequel les différentes valeurs possibles pour la première variable de déclaration correspondent à différentes plages de résultats de la mesure de signal radio, et les différentes valeurs possibles pour la deuxième variable de déclaration correspondent à différentes valeurs delta par lesquelles incrémenter ou décrémenter un composant d'une plage de résultats de mesure déclarés avec la première variable de déclaration ;

mapper le résultat de la mesure de signal radio à de multiples valeurs déclarées qui représentent conjointement ce résultat, en utilisant le mappage conjoint obtenu, dans lequel les multiples valeurs déclarées incluent l'une des différentes valeurs possibles pour la première variable de déclaration et l'une des différentes valeurs possibles pour la deuxième variable de déclaration ; et

déclarer le résultat de la mesure de signal radio au nœud destinataire (120, 820, 1620) en envoyant les multiples valeurs déclarées du nœud de déclaration (110, 810, 1510) au nœud destinataire (120, 820, 1620).

11. Nœud de déclaration selon la revendication 10, configuré pour mettre en œuvre le procédé selon l'une quelconque des revendications 2 à 3, 6 ou 9.

12. Nœud destinataire (120, 820, 1620) configuré pour déterminer le résultat d'une mesure de signal radio tel que déclaré par un nœud de déclaration (110, 810, 1510), le nœud destinataire (120, 820, 1620) configuré pour :

recevoir de multiples valeurs déclarées qui représentent conjointement un résultat déclaré de la mesure de signal radio, dans lequel les multiples valeurs déclarées comprennent l'une de différentes valeurs possibles pour une première variable de déclaration et l'une de différentes valeurs possibles pour une deuxième variable de déclaration, dans lequel les différentes valeurs possibles pour la première variable de déclaration et les différentes valeurs possibles pour la deuxième variable de déclaration sont mappées conjointement à différentes valeurs possibles pour le résultat déclaré de la mesure de signal radio, dans lequel les différentes valeurs possibles pour la première variable de déclaration correspondent à différentes plages de résultats de la mesure de signal radio, et les différentes valeurs possibles pour la deuxième variable de déclaration correspondent à différentes valeurs delta par lesquelles incrémenter ou décrémenter un composant d'une plage de résultats de mesure déclarés avec la première variable de déclaration ; et

mettre en œuvre une ou plusieurs opérations sur la base des multiples valeurs déclarées.

13. Nœud destinataire selon la revendication 12, configuré pour mettre en œuvre le procédé selon l'une quelconque des revendications 4 à 9.

14. Nœud selon l'une quelconque des revendications 10 à 13, dans lequel le nœud de déclaration (110, 810, 1510) est un équipement utilisateur et le nœud destinataire (120, 820, 1620) est une station de base.

15. Support de stockage lisible par ordinateur contenant un programme informatique comprenant des instructions qui, lorsqu'elles sont exécutées par au moins un processeur d'un nœud, amène le nœud à effectuer le procédé selon l'une quelconque des revendications 1 à 9.

*Figure 1*

EP 3 363 245 B1

OBTAIN, AT THE REPORTING NODE, THE RESULT OF A RADIO
SIGNAL MEASUREMENT
202

OBTAIN, AT THE REPORTING NODE, A JOINT MAPPING IN WHICH
DIFFERENT POSSIBLE VALUES FOR A FIRST REPORTING VARIABLE
AND DIFFERENT POSSIBLE VALUES FOR A SECOND REPORTING
VARIABLE ARE JOINTLY MAPPED TO DIFFERENT POSSIBLE
VALUES FOR THE RESULT OF THE RADIO SIGNAL MEASUREMENT
204

MAP THE RESULT OF THE RADIO SIGNAL MEASUREMENT TO ONE
OR MORE REPORTED VALUES THAT COMPRISE ONE OF THE
DIFFERENT POSSIBLE VALUES FOR THE FIRST REPORTING
VARIABLE, ONE OF THE DIFFERENT POSSIBLE VALUES FOR THE
SECOND REPORTING VARIABLE, OR BOTH, USING THE OBTAINED
JOINT MAPPING
206

REPORT THE RESULT OF THE RADIO SIGNAL MEASUREMENT TO
THE RECIPIENT NODE BY SENDING THE ONE OR MORE
REPORTED VALUES FROM THE REPORTING NODE TO THE
RECIPIENT NODE
208

*Figure 2*

JOINT MAPPING
150

M₁ M₂ M₃
M₄ M₅ Mₘ
M

R1₁ R1₂ R1₃
R1₄ R1₅ R1ₓ
R1

R2₁ R2₂ R2₃
R2₄ R2₅ R2ᵧ
R2

**Figure 3A**

JOINT MAPPING
170

R1₁ R1₂ R1₃
R1₄ R1₅ R1ₓ
R1

R2₁ R2₂ R2₃
R2₄ R2₅ R2ᵧ
R2

R₁ R₂ R₃
R₄ R₅ R₆
R

**Figure 3B**

**Figure 4A**

| | |
|---|---|
| $R1_1$ | $M_1$ |
| $R1_2$ | $M_2$ |
| $R2_1$ | $M_3$ |
| $R2_2$ | $M_4$ |

401 402 403A 403B

**Figure 4B**

| | |
|---|---|
| $R1_1$ | $R_1$ |
| $R1_2$ | $R_2$ |
| $R2_1$ | $R_3$ |
| $R2_2$ | $R_4$ |

401 402 404A 404B

**Figure 4C**

| | |
|---|---|
| $R1_1$ | $M_1 \leq M < M_2$ |
| $R1_2$ | $M_5 \leq M < M_6$ |
| $R2_1$ | $M_3 \leq M < M_4$ |
| $R2_2$ | $M_7 \leq M < M_8$ |

401 402 406

**Figure 4D**

| | |
|---|---|
| $R1_1$ | $M_1 \leq M < M_2$ |
| $R1_2$ | $M_2 \leq M < M_3$ |
| $R2_1$ | $\Delta_1$ |
| $R2_2$ | $\Delta_2$ |

401 402 407 408

**Figure 4E**

| | |
|---|---|
| $R1_1$ | $R_1$ |
| $R1_2$ | $R_2$ |

410

| | |
|---|---|
| $R2_1$ | $\Delta_1$ |
| $R2_2$ | $\Delta_2$ |

411

| Reported Value | Measured Quantity Value | Unit |
|---|---|---|
| RSTD_0000 | -15391 > RSTD | $T_s$ |
| RSTD_0001 | $-15391 \leq RSTD < -15386$ | $T_s$ |
| … | … | … |
| RSTD_2258 | $-4106 \leq RSTD < -4101$ | $T_s$ |
| RSTD_2259 | $-4101 \leq RSTD < -4096$ | $T_s$ |
| RSTD_2260 | $-4096 \leq RSTD < -4095$ | $T_s$ |
| RSTD_2261 | $-4095 \leq RSTD < -4094$ | $T_s$ |
| … | … | … |
| RSTD_6353 | $-3 \leq RSTD < -2$ | $T_s$ |
| RSTD_6354 | $-2 \leq RSTD < -1$ | $T_s$ |
| RSTD_6355 | $-1 \leq RSTD \leq 0$ | $T_s$ |
| RSTD_6356 | $0 < RSTD \leq 1$ | $T_s$ |
| RSTD_6357 | $1 < RSTD \leq 2$ | $T_s$ |
| RSTD_6358 | $2 < RSTD \leq 3$ | $T_s$ |
| … | … | … |
| RSTD_10450 | $4094 < RSTD \leq 4095$ | $T_s$ |
| RSTD_10451 | $4095 < RSTD \leq 4096$ | $T_s$ |
| RSTD_10452 | $4096 < RSTD \leq 4101$ | $T_s$ |
| RSTD_10453 | $4101 < RSTD \leq 4106$ | $T_s$ |
| … | … | … |
| RSTD_12709 | $15381 < RSTD \leq 15386$ | $T_s$ |
| RSTD_12710 | $15386 < RSTD \leq 15391$ | $T_s$ |
| RSTD_12711 | $15391 < RSTD$ | $T_s$ |

## Figure 5A

| Reported Value | Delta Quantity Value | Unit |
|---|---|---|
| RSTDdelta_0 | +1 | $T_s$ |
| … | … | … |
| RSTDdelta_3 | +4 | $T_s$ |
| RSTDdelta_4 | +0.25 | $T_s$ |
| RSTDdelta_5 | +0.5 | $T_s$ |

## Figure 5B

```
NeighbourMeasurementElement ::= SEQUENCE {
    physCellIdNeighbour      INTEGER (0..503),
    cellGlobalIdNeighbour    ECGI                          OPTIONAL,
    earfcnNeighbour          ARFCN-ValueEUTRA              OPTIONAL,      -- Cond NotSameAsRef2
    rstd                     INTEGER (0..12711),
    rstd-Quality             OTDOA-MeasQuality,
    ...,
    [[ earfcnNeighbour-v9a0  ARFCN-ValueEUTRA-v9a0         OPTIONAL       -- Cond NotSameAsRef3
    ]]
}
```

*Figure 5C*

| Reported value | Measured quantity value | Unit |
|---|---|---|
| RX-TX_TIME_DIFFERENCE_0000 | $T_{UE\ Rx-Tx} < 2$ | $T_s$ |
| RX-TX_TIME_DIFFERENCE_0001 | $2 \leq T_{UE\ Rx-Tx} < 4$ | $T_s$ |
| RX-TX_TIME_DIFFERENCE_0002 | $4 \leq T_{UE\ Rx-Tx} < 6$ | $T_s$ |
| ... | ... | ... |
| RX-TX_TIME_DIFFERENCE_2046 | $4092 \leq T_{UE\ Rx-Tx} < 4094$ | $T_s$ |
| RX-TX_TIME_DIFFERENCE_2047 | $4094 \leq T_{UE\ Rx-Tx} < 4096$ | $T_s$ |
| RX-TX_TIME_DIFFERENCE_2048 | $4096 \leq T_{UE\ Rx-Tx} < 4104$ | $T_s$ |
| RX-TX_TIME_DIFFERENCE_2049 | $4104 \leq T_{UE\ Rx-Tx} < 4112$ | $T_s$ |
| ... | ... | ... |
| RX-TX_TIME_DIFFERENCE_4093 | $20456 \leq T_{UE\ Rx-Tx} < 20464$ | $T_s$ |
| RX-TX_TIME_DIFFERENCE_4094 | $20464 \leq T_{UE\ Rx-Tx} < 20472$ | $T_s$ |
| RX-TX_TIME_DIFFERENCE_4095 | $20472 \leq T_{UE\ Rx-Tx}$ | $T_s$ |

## Figure 6A

| Reported Value | Delta Quantity Value | Unit |
|---|---|---|
| RX-TX_delta_0 | +0.5 | $T_s$ |
| RX-TX_delta_1 | +1 | $T_s$ |

## Figure 6B

OBTAIN, AT THE RECIPIENT NODE, A JOINT MAPPING IN WHICH DIFFERENT POSSIBLE VALUES FOR A FIRST REPORTING VARIABLE AND DIFFERENT POSSIBLE VALUES FOR A SECOND REPORTING VARIABLE ARE JOINTLY MAPPED TO DIFFERENT POSSIBLE VALUES FOR A REPORTED RESULT OF THE RADIO SIGNAL MEASUREMENT
702

RECEIVE, AT THE RECIPIENT NODE, ONE OR MORE REPORTED VALUES THAT COMPRISE ONE OF THE DIFFERENT POSSIBLE VALUES FOR THE FIRST REPORTING VARIABLE, ONE OF THE DIFFERENT POSSIBLE VALUES FOR THE SECOND REPORTING VARIABLE, OR BOTH
704

PERFORM ONE OR MORE OPERATIONS BASED ON THE ONE OR MORE VALUES
706

*Figure 7*

CONFIGURING
NODE
860

880

JOINT
MAPPING
850

REPORTING NODE
810

MEASUREMENT
RESULT 840

830

JOINT
MAPPING
850

RECIPIENT
NODE
820

## FIGURE 8

GENERATE CONFIGURATION INFORMATION FOR CONFIGURING THE REPORTING NODE TO REPORT THE RESULT OF A RADIO SIGNAL MEASUREMENT USING A JOINT MAPPING IN WHICH DIFFERENT POSSIBLE VALUES FOR A FIRST REPORTING VARIABLE AND DIFFERENT POSSIBLE VALUES FOR A SECOND REPORTING VARIABLE ARE JOINTLY MAPPED TO DIFFERENT POSSIBLE VALUES FOR A REPORTED RESULT OF THE RADIO SIGNAL MEASUREMENT
902

SEND THE GENERATED CONFIGURATION INFORMATION TO THE REPORTING NODE
904

*Figure 9*

RECEIVE A MEASUREMENT REQUEST OR A MEASUREMENT REPORT
CONFIGURATION
1010

OBTAIN A MEASUREMENT RESULT
1002

DETERMINE WHETHER TO TRANSMIT A MEASUREMENT RESULT
USING A COMBINED MEASUREMENT REPORT MAPPING OR USING A
SINGLE MEASUREMENT REPORT MAPPING, WHEREIN THE
COMBINED MEASUREMENT REPORT MAPPING COMPRISES AT
LEAST TWO REPORTED LEVELS WHICH JOINTLY REPRESENT A
SINGLE MEASUREMENT RESULT
1008

CREATE A COMBINED MEASUREMENT REPORT USING THE
COMBINED MEASUREMENT REPORT MAPPING, WHEREIN THE
COMBINED MEASUREMENT REPORT MAPPING COMPRISES AT
LEAST TWO REPORTED LEVELS WHICH JOINTLY REPRESENT A
SINGLE MEASUREMENT RESULT
1004

SEND TO A SECOND NODE AT LEAST ONE MEASUREMENT RESULT
USING THE COMBINED MEASUREMENT REPORT
1006

*Figure 10*

SEND A MEASUREMENT REQUEST OR MEASUREMENT REPORT
CONFIGURATION TO THE FIRST NODE
1106

RECEIVE A COMBINED MEASUREMENT REPORT FROM A FIRST
NODE
1102

USE THE RECEIVED REPORT FOR ONE OR MORE OPERATIONAL
TASKS
1104

*Figure 11*

DETERMINE WHETHER THE FIRST NODE IS TO TRANSMIT AT LEAST ONE MEASUREMENT RESULT TO THE SECOND NODE USING A COMBINED MEASUREMENT REPORT MAPPING OR USING A SINGLE MEASUREMENT REPORT MAPPING
1202

BASED ON THE DETERMINATION, CONFIGURE THE FIRST NODE WITH INFORMATION TO ENABLE THE FIRST NODE TO TRANSMIT MEASUREMENT RESULTS USING THE COMBINED OR THE SINGLE MEASUREMENT REPORT MAPPING
1204

*Figure 12*

*Figure 13*

*Figure 14*

EP 3 363 245 B1

FIGURE 15

**FIGURE 16**

EP 3 363 245 B1

Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62241676

**Non-patent literature cited in the description**

- Text Proposal and Discussion on Further enhancements for OTDOA. *3GPP R1-153744*
- Text Proposal for Improved RSTD reporting. *3GPP R1-153609*
- On OTDOA-based enhancements. *3GPP R1-156103*
- *3GPP TS 36.133 V13.1.0,* 02 October 2015
- *3GPP TS 36.355 V12.4.0,* March 2015